(19) Europäisches Patentamt
European Patent Office
Office européen des brevets

(11) EP 0 554 834 B1

(12) **EUROPEAN PATENT SPECIFICATION**

(45) Date of publication and mention of the grant of the patent:
**03.06.1998 Bulletin 1998/23**

(51) Int Cl.6: **C09B 67/00**, G03C 1/83

(21) Application number: **93101579.6**

(22) Date of filing: **02.02.1993**

(54) **Process for dispersing dyestuff and silver halide photographic material containing dyestuff**

Verfahren zur Dispergierung eines Farbstoffs und ein Farbstoff enthaltendes photographisches Silberhalogenidmaterial

Procédé de dispersion d'un colorant et matériau photographique à l'halogénure d'argent contenant un colorant

(84) Designated Contracting States:
**DE FR GB**

(30) Priority: **03.02.1992 JP 46397/92**
**03.02.1992 JP 46398/92**

(43) Date of publication of application:
**11.08.1993 Bulletin 1993/32**

(73) Proprietor: **FUJI PHOTO FILM CO., LTD.**
**Kanagawa 250-01 (JP)**

(72) Inventors:
- **Karino, Yukio, c/o Fuji Photo Film Co., Ltd.**
  **Minami Ashigara-shi, Kanagawa (JP)**
- **Ohno, Shigeru, c/o Fuji Photo Film Co., Ltd.**
  **Minami Ashigara-shi, Kanagawa (JP)**
- **Usami, Takashi, c/o Fuji Photo Film Co., Ltd.**
  **Minami Ashigara-shi, Kanagawa (JP)**
- **Adachi, Keiichi, c/o Fuji Photo Film Co., Ltd.**
  **Minami Ashigara-shi, Kanagawa (JP)**

(74) Representative: **Grünecker, Kinkeldey,**
**Stockmair & Schwanhäusser Anwaltssozietät**
**Maximilianstrasse 58**
**80538 München (DE)**

(56) References cited:

| | |
|---|---|
| **EP-A- 0 107 488** | **EP-A- 0 274 723** |
| **EP-A- 0 351 695** | **EP-A- 0 360 289** |
| **EP-A- 0 430 186** | **EP-A- 0 435 561** |
| **EP-A- 0 460 616** | **EP-A- 0 489 973** |
| **EP-A- 0 549 486** | **GB-A- 1 098 594** |

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

### FIELD OF THE INVENTION

The present invention relates to a process for the dispersion of a dyestuff, particularly, a photographic filter dyestuff, more particularly an oxonol dyestuff. The present invention also relates to a silver halide photographic material comprising such a dispersion. More particularly, the present invention relates to a silver halide photographic material having a hydrophilic colloidal layer containing a dyestuff which can be easily incorporated and can be decolored and/or eluted in such a manner that it does not cause residual color after development.

### BACKGROUND OF THE INVENTION

In the field of silver halide photographic materials, a light absorbing compound is generally incorporated into a silver halide emulsion layer or other hydrophilic colloidal layers to allow light of a specific wavelength range to be absorbed by these layers for the purpose of adjusting the sensitivity, the color temperature of light and the sensitivity balance in a multi-layer color light-sensitive material, enhancing the safelight stability or inhibiting halation.

For an example, a silver halide photographic material generally comprises hydrophilic colloidal layers such as light-sensitive silver halide emulsion layers. When a light-sensitive silver halide emulsion layer is imagewise exposed to light to form an image thereon, it is necessary to control the spectral composition of incident light upon the silver halide emulsion layer to improve the photographic sensitivity thereof. In this case, a dyestuff which is capable of absorbing light of wavelength ranges unnecessary for the light-sensitive silver halide emulsion layer is generally incorporated into a hydrophilic colloidal layer present farther from the support than the light-sensitive silver halide emulsion layer to make a filter layer by which only light of the desired wavelength range can be transmitted.

For the purpose of enhancing image sharpness, an antihalation layer is normally provided between the light-sensitive emulsion layer and the support or on the back side of the support to absorb harmful reflected light from the interface of the emulsion layer with the support or the back side of the support.

Further, for the purpose of enhancing the image sharpness, the silver halide emulsion layer may comprise a dyestuff capable of absorbing light of a wavelength range to which silver halide is sensitive to inhibit irradiation.

In particular, a silver halide photographic material for use in the photomechanical process, particularly a light-sensitive material for daylight use, comprises a dyestuff which absorbs ultraviolet light or visible light in a light-sensitive layer or a layer between the light source and the light-sensitive layer to enhance safelight safety.

In X-ray photographic light-sensitive materials, as a crossover cut filter for eliminating crossover light, a colored layer may be provided to enhance sharpness.

In microfilms, an antihalation layer provided between a light-sensitive emulsion layer and a support may also serve as a light-screening layer for the enhancement of daylight loadability.

These layers to be colored are often made of a hydrophilic colloid and thus normally comprise a dyestuff incorporated therein. Such a dyestuff needs to meet the following requirements:

(1) proper spectral absorption according to the purpose;
(2) photochemically inert (i.e., no adverse chemical effects on the properties of the silver halide photographic emulsion layer, e.g., sensitivity drop, regression of the latent image, fog);
(3) decolorable at the photographic processing step but dissolvable, leaving no harmful coloring on the processed photographic light-sensitive material; and
(4) excellent stability in a coating solution or silver halide photographic material and thus insusceptible to discoloration.

In order to find dyestuffs that meet these requirements, many efforts have been made.

If the layer comprising such a dyestuff serves as a filter layer or an antihalation layer, it is necessary that the layer be selectively colored so that other layers are not substantially colored. Otherwise, the layer not only exerts harmful spectral effects on the other layers but also loses its effects as a filter layer or antihalation layer.

As an approach for eliminating these difficulties, a method has been known which comprises localizing an acidic dyestuff containing sulfo group or carboxyl group in a specific layer with a mordant. Further, a method which comprises providing such a dyestuff in the form of a dispersed solid is disclosed in JP-A-56-12639 (the term "JP-A" as used herein means an unexamined published Japanese Patent Application), JP-A-55-155350, JP-A-55-155351, JP-A-52-92716, JP-A-63-197943, JP-A-63-27838, and JP-A-64-40827, Eurpoean Patents 0015601B1, and 0276566A1, and WO 88/04794.

However, most of these types of dyestuffs for use in the form of a dispersion utilize the dependence of the dissociation of a carboxyl group on the hydrogen ion concentration to control fixing and decoloration. Although such a dyestuff

is substantially water-insoluble at a pH of 6 or less, it is disadvantageous in that it cannot be sufficiently fixed in a silver halide photographic material. Thus, the dyestuff diffuses into other layers, dissociates or dissolves during storage, or changes hue. It is known that if the dyestuff diffuses into other layers, it may exert adverse photographic effects such as filter desensitization and adsorption to silver halide grains on the light-sensitive material.

Such adverse photographic effects have been known to be exerted with oxonol dyestuffs, particularly, those disclosed in JP-A-52-92716, JP-A-55-120030, JP-A-63-27838, JP-A-64-40827, JP-A-2-277044, JP-A-2-282244, JP-A-3-23441, JP-A-3-208044, JP-A-3-192250, JP-A-3-194544, JP-A-3-200248, JP-A-3-204639, JP-A-3-204640, JP-A-3-206441, JP-A-3-206442, JP-A-3-208042, JP-A-3-208043, and JP-A-3-213847.

## SUMMARY OF THE INVENTION

It is therefore an object of the present invention to provide a process for the dispersion of a solid fine dyestuff, for dying a specific hydrophilic colloidal layer in the photographic light-sensitive material and which exhibits excellent stability.

It is another object of the present invention to provide a silver halide photographic material which comprises a hydrophilic colloidal layer that can be exclusively dyed with a dyestuff and can be readily decolored upon photographic processing (particularly in low pH rapid processing).

It is a further object of the present invention to provide a silver halide photographic material with excellent storage stability which comprises a hydrophilic colloidal layer being dyed with a dyestuff that can be irreversibly decolored upon photographic processing.

These and other objects of the present invention will become more apparent from the following detailed description and examples.

These objects of the present invention are accomplished by a process for the dispersion of a dyestuff represented by the following formula (I), which comprises increasing regularity in orientation of dyestuff molecules wherein at least after the dispersion heating is effected at 50 to 95°C.

$$D - (X)_y \qquad (I)$$

wherein D represents a compound containing chromophores; X represents a dissociative proton or dissociative proton-containing group connected to D directly or via a divalent connecting group; and y represents an integer of 1 to 7, characterized in that the heat treatment time is from 1 hour to 3 weeks.

These objects of the present invention are also accomplished by a process for the dispersion of a dyestuff represented by the following formula (II), which comprises increasing regularity in orientation of dyestuff molecules wherein at least after the dispersion heating is effected at 50 to 95°C.

$$A_1 = (L_1 - L_2)_m = L_3 - (L_4 = L_5)_n - A_2 \qquad (II)$$

wherein $A_1$ and $A_2$ each represents an acidic nucleus necessary for the formation of an oxonol dyestuff; $L_1$, $L_2$, $L_3$, $L_4$ and $L_5$ each represents a methine group; and m and n each represents 0 or 1, characterized in that the heat treatment time is from 1 hour to 3 weeks.

These objects of the present invention are further accomplished by a dispersion process as defined above, wherein the heating is effected in the presence of an organic compound containing a carboxylic group with the dyestuff represented by formula (II).

These objects of the present invention are further accomplished by a silver halide photographic material as defined in claim 5.

Furthermore, it was found that these problems can be solved with a silver halide photographic material according to claim 5 comprising on a support at least one light-sensitive silver halide emulsion layer and at least one hydrophilic colloidal layer containing a solid dispersion of a dyestuff represented by formula (II), wherein the ratio of the absorbance at 680 nm to that at 530 nm in the absorption spectrum of the dyestuff being in the range of 0.50 or less. Preferred among dyestuffs represented by formula (II) are those represented by the following formula (III):

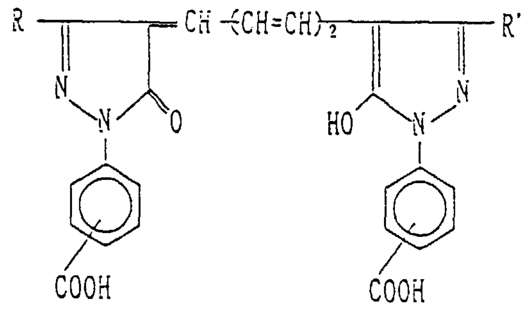

(III)

wherein R and R' each represents an alkyl group, a substituted alkyl group, an aryl group, a substituted aryl group or an ester group. Furthermore, it was found that these problems can be solved with a silver halide photographic material comprising on a support at least one light-sensitive silver halide emulsion layer and at least one hydrophilic colloidal layer containing a solid dispersion of a dyestuff represented by formula (II), wherein the ratio of the primary diffraction intensity when the diffraction angle 2 θ of X-ray diffraction of said dyestuff is about 26 to 27 degrees to the secondary diffraction intensity when the diffraction angle 2 θ is about 14 degrees is 1.30 or less. Particularly preferred among dyestuffs represented by formula (III) is one represented by the following formula (IV):

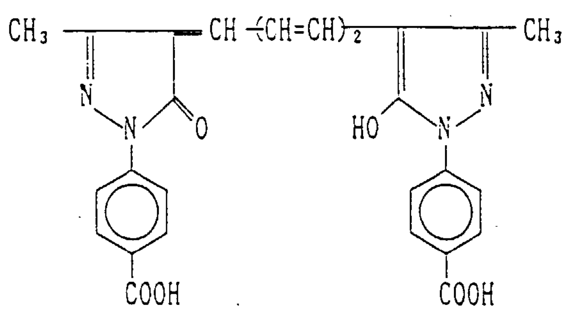

(IV)

BRIEF DESCRIPTION OF THE DRAWINGS

By way of example and to make the description more clear, reference is made to the accompanying drawing in which:

Figure 1 is a graph illustrating X-ray diffraction of Dyestuff IV-1;
Figure 2 is a graph illustrating X-ray diffraction of Dyestuff IV-4, and

DETAILED DESCRIPTION OF THE INVENTION

Formula (I) will be further described hereinafter.

The compound containing chromophores represented by D can be selected from many known dyestuff compounds. Examples of such compounds include oxonol dyestuffs, merocyanine dyestuffs, cyanine dyestuffs, arylidene dyestuffs, azomethine dyestuffs, triphenylmethane dyestuffs, azo dyestuffs, and anthraquinone dyestuffs. Specific examples of such dyestuffs include compounds as described in JP-A-3-259136, line 14, lower left column, page 5 - last line, lower left column, page 13.

The dissociative proton or dissociative proton-containing group contained in the dyestuff used in the present invention represented by formula (I) is preferably in an undissociated form during dispersion and treatment for increasing regularity in orientation of the dyestuff molecules. Examples of such a group include a carboxylic group, a sulfonamide group, an arylsulfamoyl group, a sulfonylcarbamoyl group, a carbonylsulfamoyl group, and an enol group in an oxonol dyestuff.

Formula (II) will be further described hereinafter.

The acidic nucleus represented by $A_1$ or $A_2$ is preferably a methylene group or cyclic ketomethylene group interposed between electron withdrawing groups. Specific examples of such a methylene group or cyclic ketomethylene group will be given below in their keto form or analogous form.

A - 1

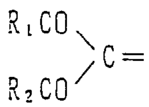

,

A - 2

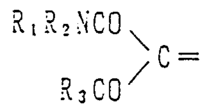

,

A - 3

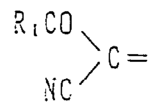

,

A - 4

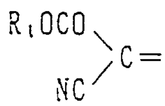

,

A - 5

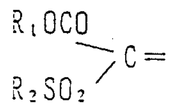

,

A - 6

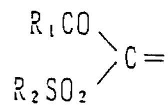

,

A - 7

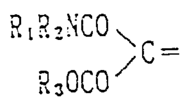

,

A - 8

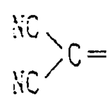

,

A - 9

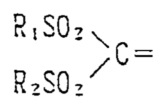

,

A - 1 0

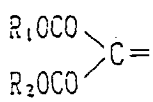

,

A - 1 1

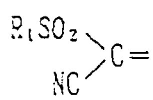

,

A - 1 2

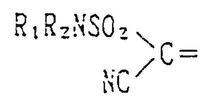

,

A - 1 3

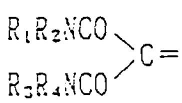

,

A - 1 4

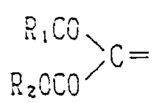

,

A - 1 5

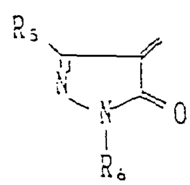

,

A－16

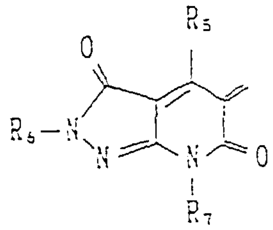

,

A－17

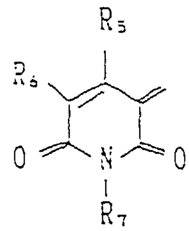

,

A－18

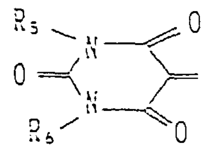

,

A－19

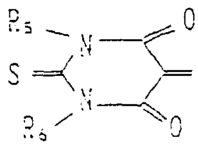

,

A－20

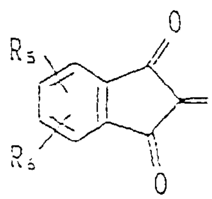

,

A－21

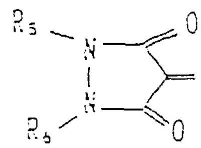

,

A－22

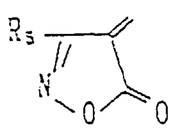

,

A－23

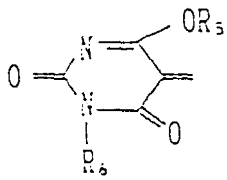

,

A－24

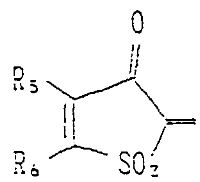

,

A－25

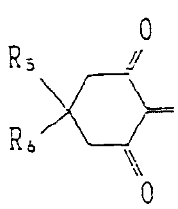

,

A－26

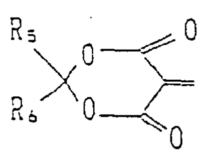

,

A－27

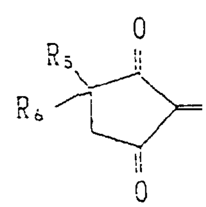

,

A－２８

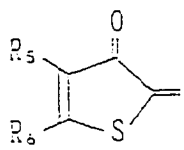

,

A－２９

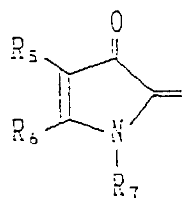

,

A－３０

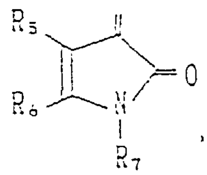

,

A－３１

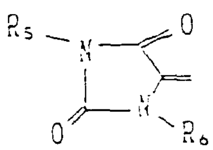

,

A－３２

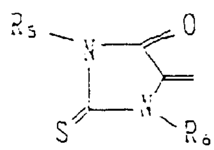

,

A－３３

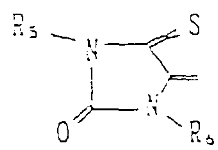

,

A－３４

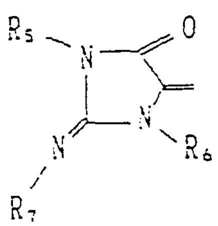

,

A－３５

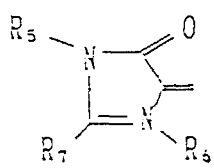

,

A－３６

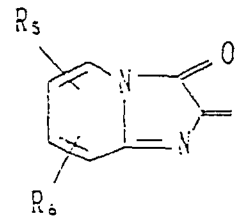

,

A－３７

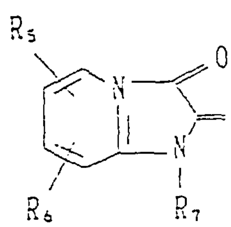

,

A－３８

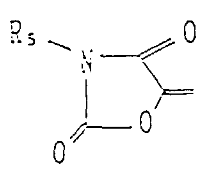

,

A－３９

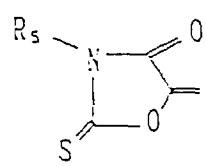

,

A－40

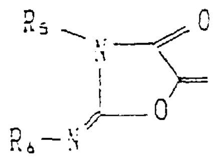

,

A－41

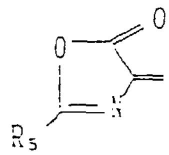

,

A－42

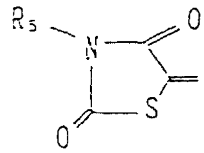

,

A－43

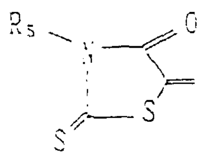

,

A－44

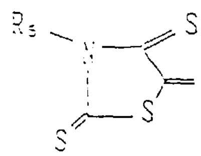

,

A－45

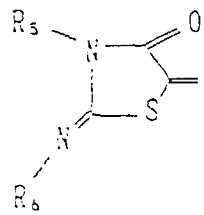

,

A－46

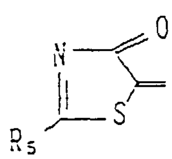

,

A－47

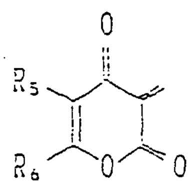

,

A－48

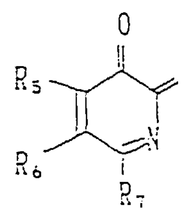

,

A－49

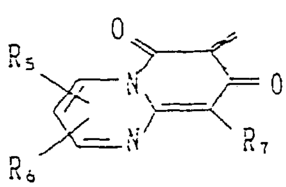

,

A－50

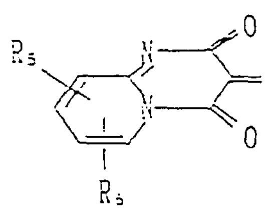

,

A－51

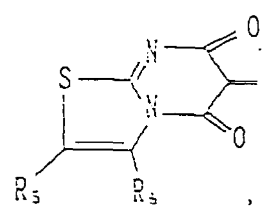

,

A-52

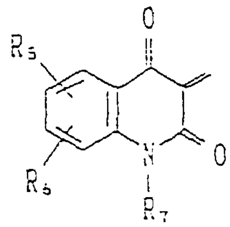

,

A-53

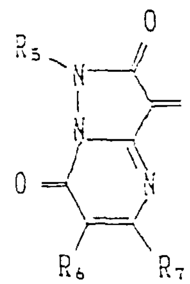

,

A-54

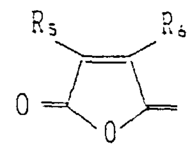

,

A-55

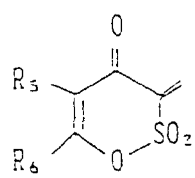

In these formulae, $R_1$, $R_2$, $R_3$ and $R_4$ each represents a hydroxyl group, an alkyl group, an aryl group, a heterocyclic group, or an alkenyl group, which may be substituted by substituent(s) which are those described for $R_5$, $R_6$ and $R_7$ below. $R_5$, $R_6$ and $R_7$ each represents a hydrogen atom or a substituent. $R_1$ and $R_2$, $R_3$ and $R_4$, or $R_5$ and $R_6$ may be connected to each other to form a 5- or 6-membered ring.

The substituent represented by $R_5$, $R_6$ or $R_7$ is not specifically limited, provided it is not a substituent which substantially dissolves a dyestuff of formula (II) in water at pH 5 to 8. Examples of such a substituent include a carboxylic group, a $C_{1-10}$ sulfonamide group (e.g., methanesulfonamide, benzenesulfonamide, butanesulfonamide), a $C_{2-10}$ sulfonylcarbamoyl group (e.g., methanesulfonylcarbamoyl, propanesulfonylcarbamoyl), a $C_{1-8}$ alkyl group (e.g., methyl, ethyl, isopropyl, butyl, hexyl, octyl, 2-hydroxyethyl, 4-carboxybutyl), a $C_{1-8}$ alkoxy group (e.g., methoxy, ethoxy, butoxy), a halogen atom (e.g., chlorine, bromine, fluorine), $C_{0-10}$ amino group (e.g., dimethylamino, diethylamino, carboxyethylamino), a $C_{2-10}$ ester group (e.g., methoxycarbonyl), an amide group (e.g., acetylamino, benzamide), a $C_{1-10}$ carbamoyl group (e.g., methylcarbamoyl, ethylcarbamoyl), a $C_{0-10}$ sulfamoyl group (e.g., methylsulfamoyl, butylsulfamoyl, phenylsulfamoyl), a $C_{6-10}$ aryl group (e.g., phenyl, naphthyl, 4-carboxyphenyl, 3-carboxyphenyl, 3,5-dicarboxyphenyl, 4-methanesulfonamidephenyl, 4-butanesulfonamidephenyl), a $C_{2-10}$ acyl group (e.g., acetyl, benzoyl, propanoyl), a $C_{1-10}$ sulfonyl group (e.g., methanesylfonyl, benzenesulfonyl), a $C_{1-10}$ ureide group (e.g., ureide, methylureide), a $C_{2-10}$ urethane group (e.g., methoxycarbonylamino, ethoxycarbonylamino), a cyano group, a hydroxyl group, a nitro group, and a heterocyclic group (e.g., 5-carboxybenzooxazole ring, pyridine ring, sulfolane ring, furan ring).

The alkyl group represented by $R_1$, $R_2$, $R_3$ or $R_4$ is preferably a $C_{1-10}$ alkyl group (e.g., methyl, ethyl, benzyl, phenethyl, propyl, butyl, isobutyl, pentyl, hexyl, octyl, nonyl) which may contain substituents (e.g., those described for $R_5$ - $R_7$ above).

The aryl group represented by $R_1$, $R_2$, $R_3$ or $R_4$ is preferably a $C_{6-10}$ aryl group (e.g., phenyl, naphthyl) which may contain substituents (e.g., those described for $R_5$ - $R_7$ above).

The heterocyclic group represented by $R_1$, $R_2$, $R_3$ or $R_4$ is preferably a 5- or 6-membered heterocyclic group (e.g., oxazole ring, benzooxazole ring, thiazole ring, imidazole ring, pyridine ring, furan ring, thiophene ring, sulfolane ring, pyrazole ring, pyrrole ring, chroman ring, coumarine ring) which may contain substituents (e.g., those described for $R_5$ - $R_7$ above).

The alkenyl group represented by $R_1$, $R_2$, $R_3$ or $R_4$ is preferably a $C_{2-10}$ alkenyl group (e.g., vinyl, allyl, 1-propenyl, 2-pentenyl, 1,3-butadienyl).

Examples of the 5- or 6-membered ring formed by connecting of $R_1$ to $R_2$, $R_3$ to $R_4$ or $R_5$ to $R_6$ include a pyrrolidine ring, a piperidine ring, a morpholine ring, and a benzene ring.

The methine group represented by $L_1$, $L_2$, $L_3$, $L_4$ or $L_5$ may contain substituents (e.g., methyl, ethyl). These substituents may be connected to each other to form a 5- or 6-membered ring (e.g., cyclopentene ring, cyclohexene ring, isophorone ring). However, the methine group is preferably unsubstituted.

In formula (II), at least one of $A_1$ and $A_2$ is preferably a pyrazolone nucleus. More preferably, $A_1$ and $A_2$ each represents a pyrazolone nucleus, and m and n each represents an integer of 1. Even more preferably, $A_1$ and $A_2$ each represents a pyrazolone nucleus, m and n each represents an integer of 1, and at least one carboxylic group or sulfonamide group is contained in formula (II).

Specific examples of the dyestuff represented by formula (II) will be given below, but the present invention should not be construed as being limited thereto.

I - 1 (Dyestuff (IV))

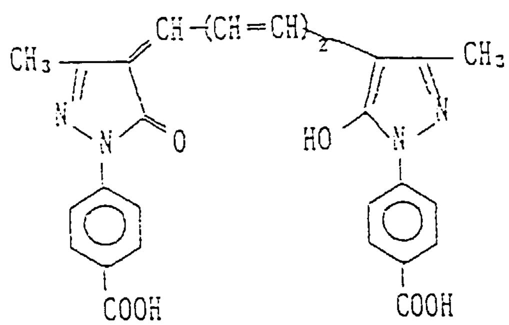

I - 2

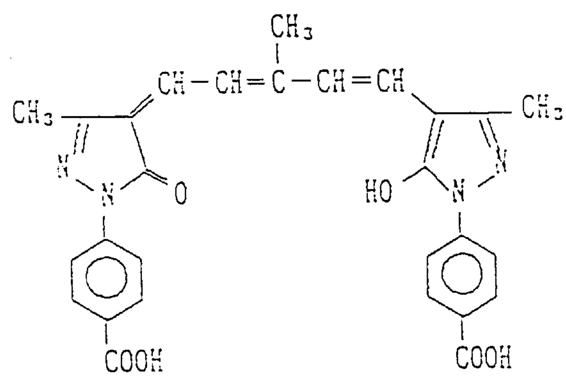

I - 3

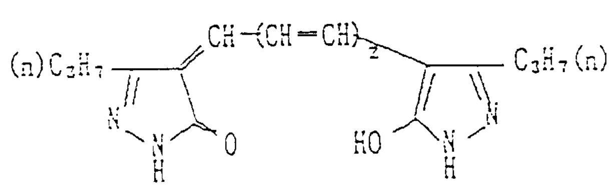

I - 4

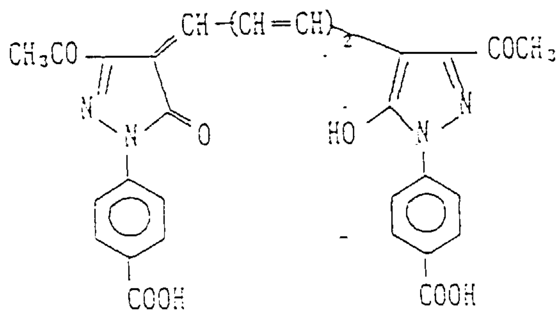

I - 5

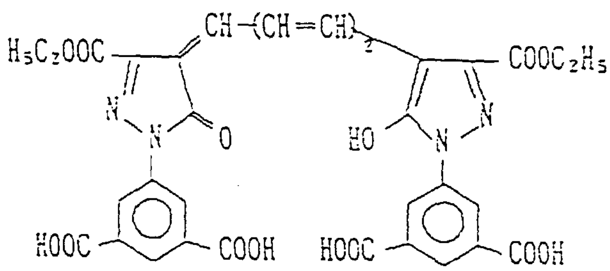

I - 6

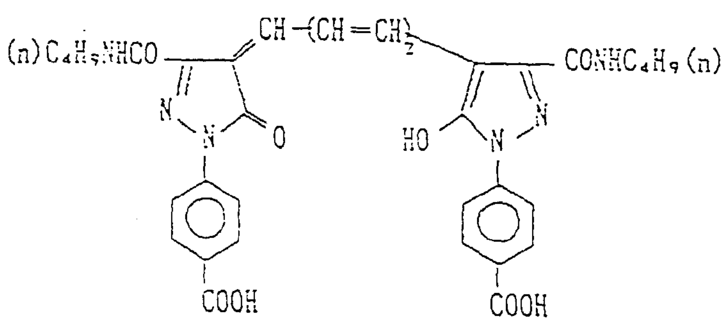

I - 7

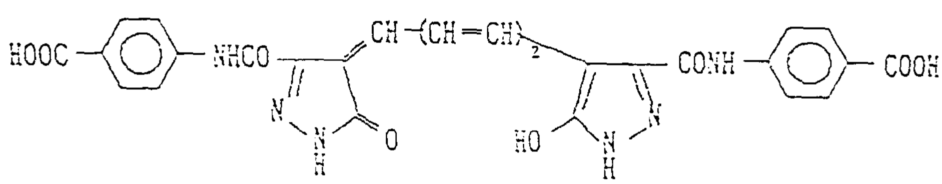

I-8

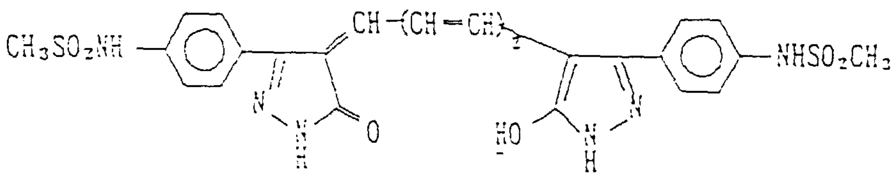

I-9

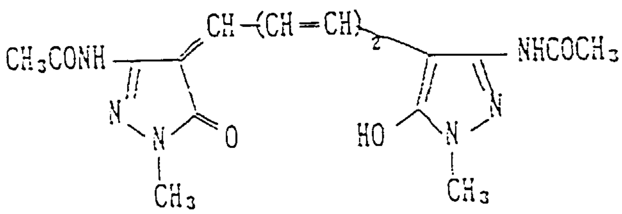

I-10

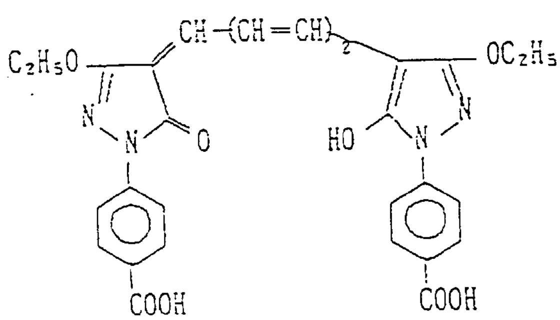

I-11

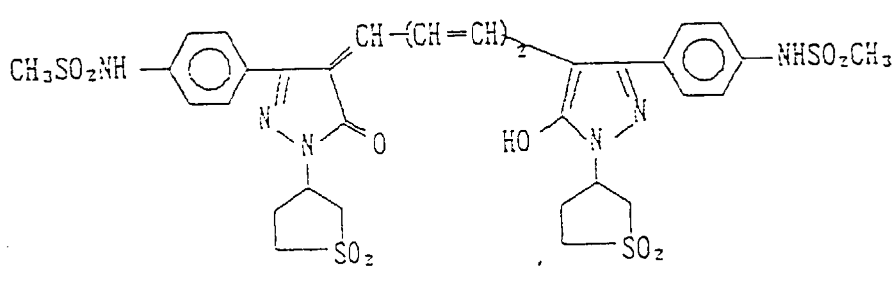

I-12

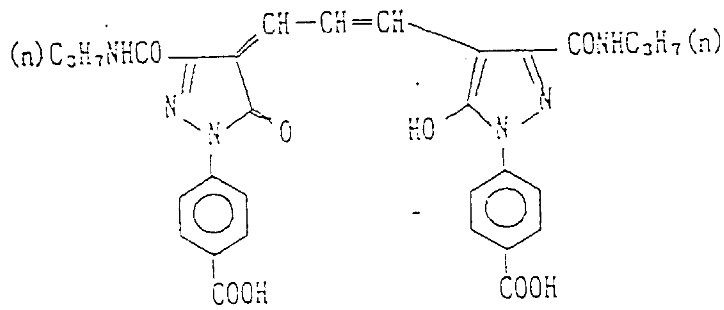

I-13

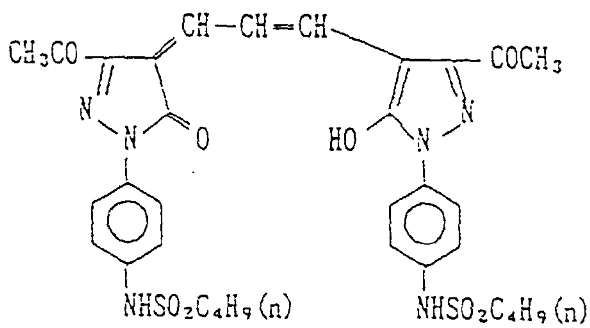

I-14

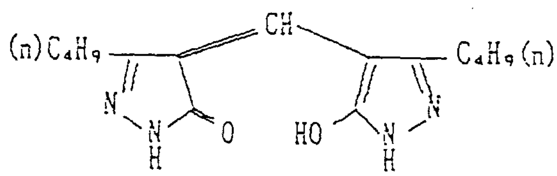

I-15

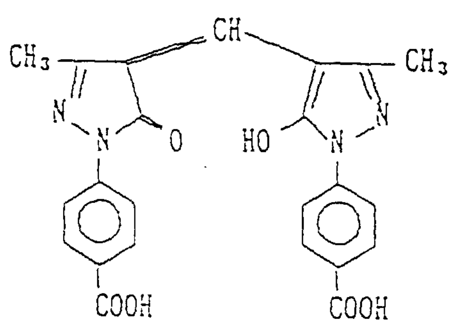

I-16

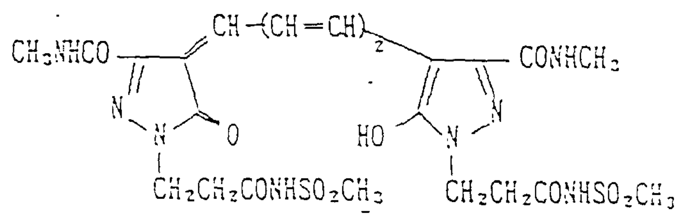

I-17

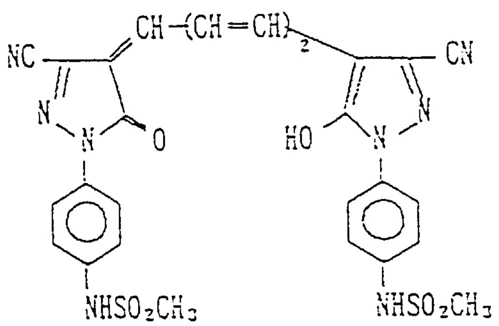

I-18

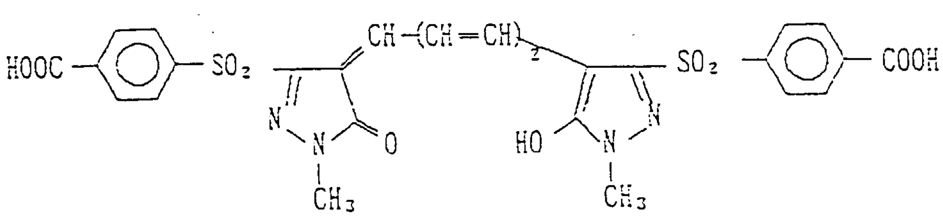

I-19

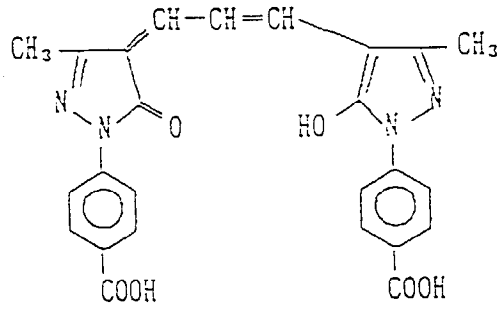

I-20

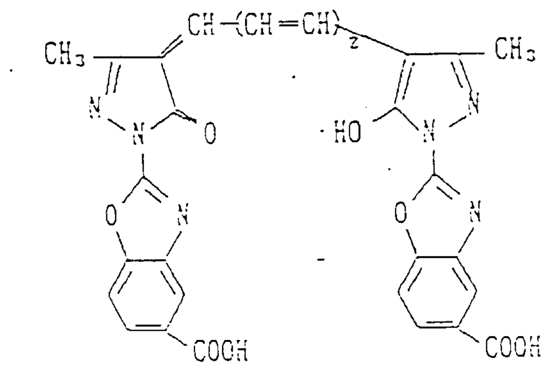

I-21

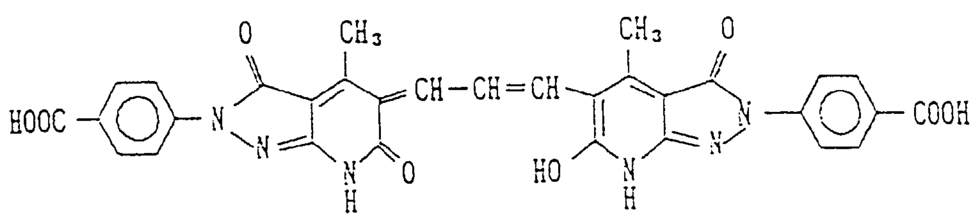

I-22

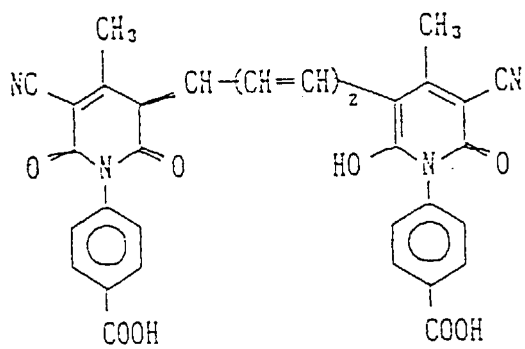

I-23

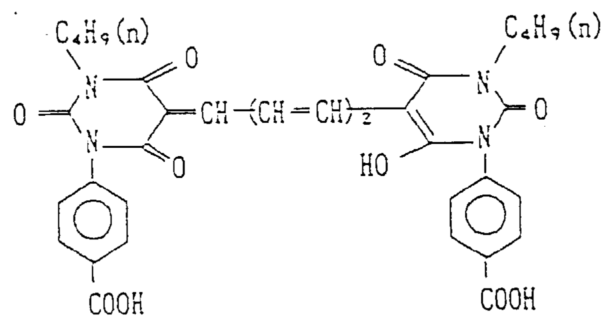

I－24

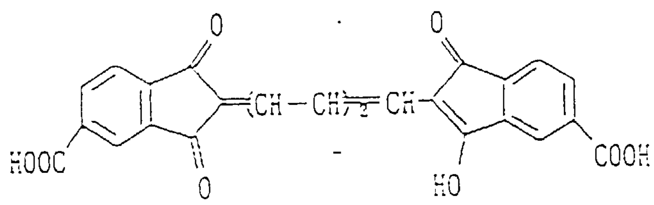

I－25

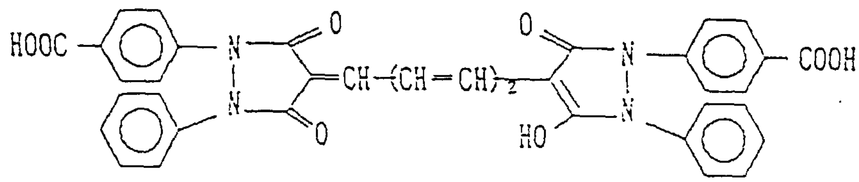

I－26

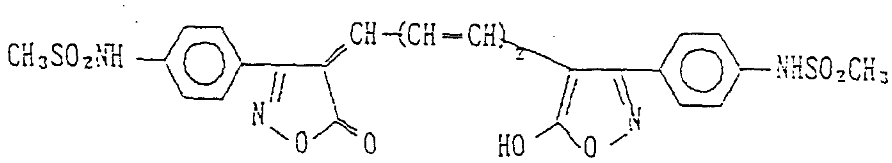

I－27

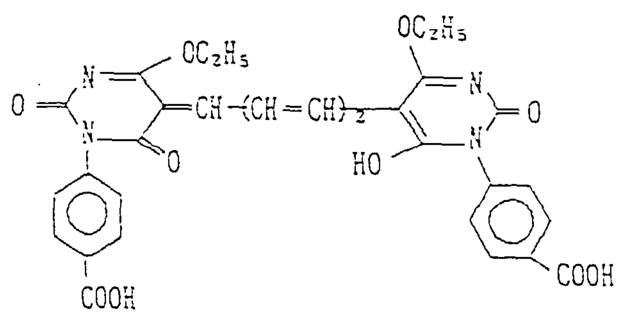

I－28

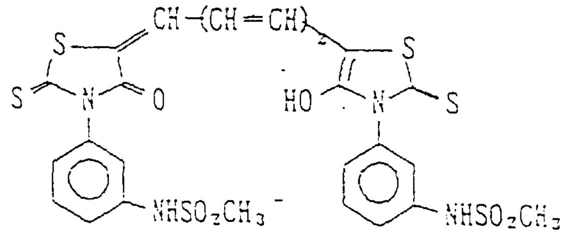

I－29

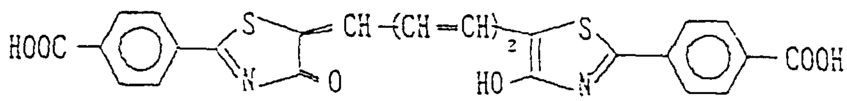

I－30

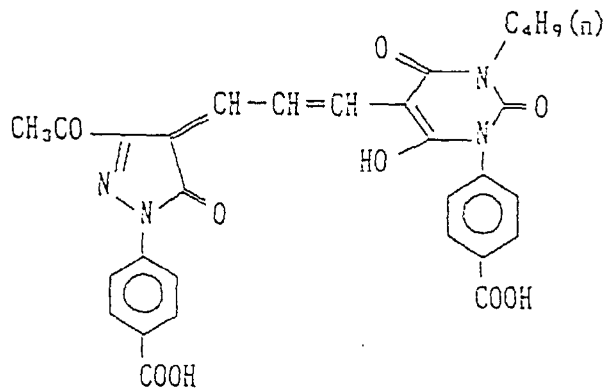

I－31

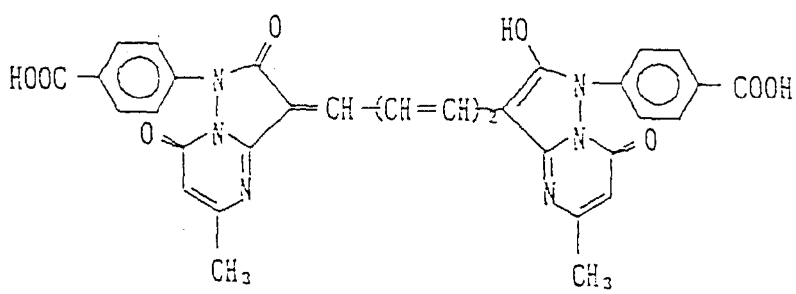

I－3 2

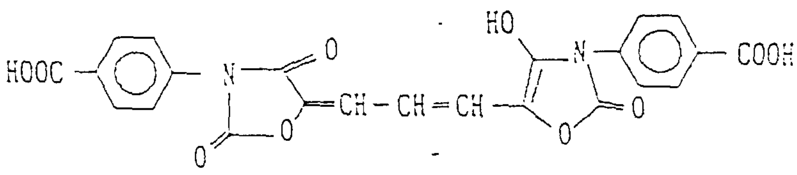

I－3 3

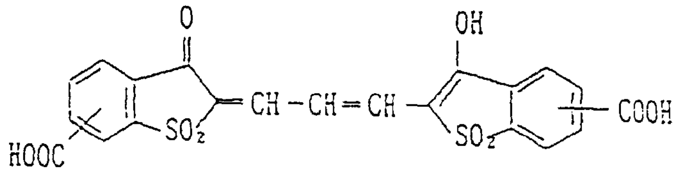

I－3 4

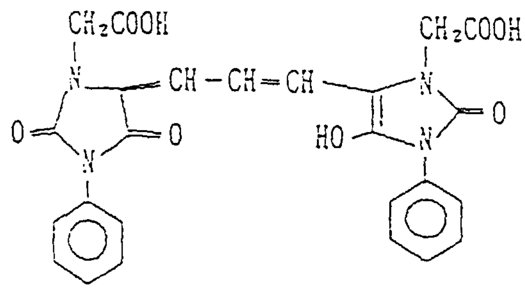

I－3 5

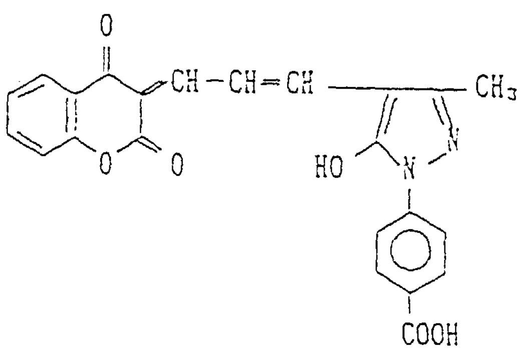

I－36

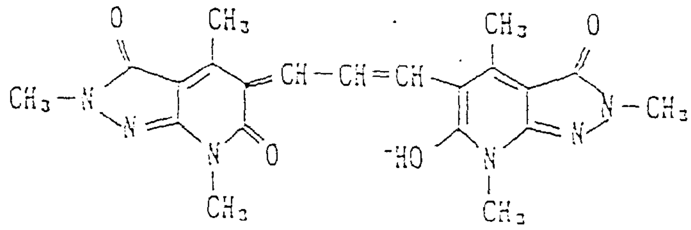

I－37

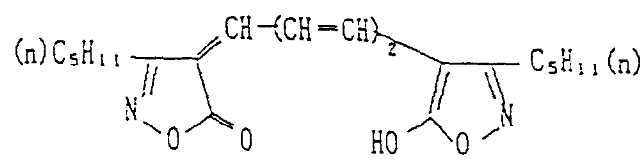

I－38

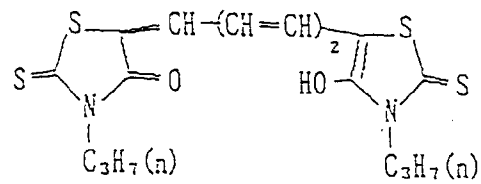

I－39

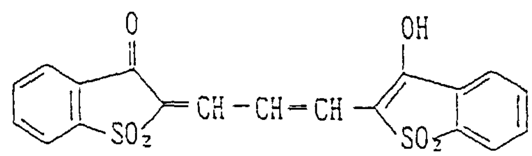

I－40

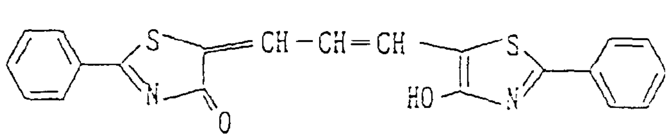

The synthesis of dyestuffs represented by formula (II) can be accomplished by methods known to those skilled in the art (e.g., condensation reaction of the corresponding acidic nucleus with a methine source such as ethyl orthoformate, diphenylamidine, 1,1,3,3-tetramethoxypropane, malonaldehydedianyl and glutaconaldehydedianyl). Specifically, methods described in JP-A-52-92716, 55-120030, 63-27838, 64-40827, 2-277044, 2-282244, 3-23441, 3-208044, 3-192250, 3-194544, 3-200248, 3-204639, 3-204640, 3-206441, 3-206442, 3-208042, 3-208043, and 3-213847 can

be used.

The means for the dispersion of the dyestuff used in the present invention can be freely selected from various dispersing machines such as a ball mill, a sand mill and a colloid mill (as described in JP-A-52-92716 and WO 88/04794), an oscillating mill, a planetary ball mill, a jet mill, a roll mill, a mantongauline, a microfluidizer and a disc impeller mill. The vertical or horizontal medium dispersing machines such as a sand mill are preferably used.

In these processes, a solvent (e.g., water) is preferably used and the combination of a solvent and a dispersing surface active agent is more preferably used.

Examples of the dispersing surface active agent include an anionic surface active agent as described in JP-A-52-92716, and WO 88/04794 or an anionic polymer as described in Japanese Patent Application No. 3-121749 or a nonionic or cationic surface active agent as necessary. An anionic polymer or anionic surface active agent is preferred.

A poor solvent may be added to a solution of a dyestuff used in the present invention in a proper solvent for the dyestuff used in the present invention to precipitate microcrystalline products. In this case, the above-mentioned dispersing surface active agent may be used. Alternatively, microcrystallization may be carried out by controlling the pH value of the system to dissolve the dyestuff, and then changing the pH value of the solution.

The finely divided grains of dyestuffs in the dispersion generally have an average grain diameter of 0.005 to 10 μm, preferably 0.01 to 1 μm, more preferably 0.01 to 0.5 μm, optionally 0.01 to 0.1 μm.

Increasing the regularity in orientation of the molecules of the dyestuff of formula (I) or (II) is effectively accomplished by heat treatment. The heat treatment of the dyestuff of formula (I) or (II) is effected at least after dispersion.

Examples of such a heat treatment process include a method which comprises dispersion of a dyestuff in water or other solvents in the presence of a dispersant without cooling or at an elevated temperature, and a method which comprises heat treatment of a solution or coating solution in which a dyestuff has been dispersed.

The heat treatment temperature is from 50 °C to 95 °C.

In order to conduct the heat treatment effectively, it is preferably conducted in a solvent. The kind of solvent is not specifically limited provided it does not substantially dissolve a dye of formula (I) therein. Examples of such a solvent include water, alcohol (e.g., methanol, ethanol, isopropyl alcohol, butanol, isoamyl alcohol, octanol, ethylene glycol, diethylene glycol, ethyl cellosolve), ketone (e.g., acetone, methyl ethyl ketone), ester. (e.g., ethyl acetate, butyl acetate), alkylcarboxylic acid (e.g., acetic acid, propionic acid), nitrile (e.g., acetonitrile), and ether (e.g., dimethoxyethane, dioxane, tetrahydrofuran).

If an organic carboxylic acid is present in the system during the heat treatment, the objects of the present invention can be more effectively accomplished. Examples of such an organic carboxylic acid include alkylcarboxylic acid (e.g., acetic acid, propionic acid), carboxymethyl cellulose (CMC), and arylcarboxylic acid (e.g., benzoic acid, salicylic acid). The amount of such an organic carboxylic acid to be used as a solvent is preferably 0.5 to 100 times the weight of the dye of formula (I). If such an organic carboxylic acid is added to the system in a solvent other than organic carboxylic acid, its amount may be in the range of 0.05 to 100 % by weight based on the weight of the dye of formula (I).

The heat treatment time is from 1 hour to 3 weeks, preferably 1 hour to 10 days, more preferably 1 hour to 4 days.

The dyestuffs represented by formula (III) to be used in the present invention have been described in JP-A-52-92716, JP-A-2-264936, JP-A-3-238447 and JP-A-4-125635, and many other patents.

In the absorption spectrum of the dyestuff of formula (IV), as described in JP-A-52-92716, a solid dispersion of a dyestuff of formula (IV), obtained by a known synthesis method, exhibits a high absorption in the vicinity of 680 nm. Such a dyestuff can be easily dissociated and diffuse into other layers in a photographic light-sensitive material under certain temperature and relative humidity conditions. Such a dyestuff exhibits a relatively high absorption in the vicinity of 680 nm in the photographic light-sensitive material in which it is typically incorporated.

None of the above mentioned patents or other patents describe that such a dyestuff exhibits a low absorption spectrum in the vicinity of 680 nm. In general, it can be considered that the spectral pattern described in JP-A-52-92716 can be obtained. The agglomerate which has been left undissociated exhibits a considerably broad spectral absorption in the vicinity of 530 nm. The lower the absorption intensity in the vicinity of 680 nm is relative to that in the vicinity of 530 nm, the less the change in the spectral absorption under some temperature and relative humidity conditions is. The lower adsorption intensity in the vicinity of 680 nm relative to that in the vicinity of 530 nm is preferred. In the present invention, the ratio of the absorbance at 680 nm to that at 530 nm is preferably 0.50 or less, more preferably 0.40 or less, with the lower limit preferably being 0.01.

The measurement of X-ray diffraction of the dyestuff of formula (IV) suggests that the dyestuff has a molecular orientation repeated only in a one-dimensional direction and thus is a layered compound. In the X-ray diffraction pattern, a primary diffraction peak is observed at a diffraction angle 2 θ of about 26 to 27 degrees, which corresponds to an interfacial spacing of about 3.3 Å, and higher order diffraction peaks based on this primary diffraction peak are observed. It was found in the X-ray diffraction pattern of the dye of formula (IV), prepared by the above mentioned known synthesis method, that the intensity of primary diffraction peak at a diffraction angle 2 θ of about 26 to 27 degrees is considerably higher than that of secondary diffraction peak at a diffraction angle 2 θ of about 14 degrees. This shows that the dye of formula (IV) used in the present invention exhibits a relatively high secondary diffraction peak intensity and thus has

sharper peaks. It can be interpreted that the dyestuff of formula (IV) used in the present invention has a higher regularity of molecular orientation. In the present invention, the ratio of the intensity of primary diffraction at a diffraction angle 2 $\theta$ of about 26 to 27 degree to that of secondary diffraction at a diffraction angle 2 $\theta$ of about 14 degrees is 1.30 or less, preferably 1.20 or less, with the lower limit preferably being 0.1.

Some relationship can be observed between the above mentioned diffraction intensity ratio and the previously mentioned absorbance ratio in the absorption spectrum. The smaller the diffraction intensity ratio is, the smaller is the absorbance ratio and hence the smaller is the change in the absorption spectum due to heat and moisture. However, this tendency is not necessarily true because different dispersants, dispersing machines and other dispersing conditions under which the solid dispersion is prepared may give different absorption spectra with the same X-ray diffraction pattern.

The dyestuff used in the present invention can be subjected to the previously mentioned increasing of the regularity in orientation of dyestuff molecules before being incorporated in the light-sensitive material to provide the desired absorption spectrum and/or X-ray diffraction pattern of the dyestuff used in the present invention.

The dyestuff used in the present invention may be incorporated in a hydrophilic colloidal layer in the form of fine solid dispersion for various purposes. The position at which the dyestuff used in the present invention is incorporated depends on the purpose and can be readily determined by the skilled artisan. The dyestuff used in the present invention can be provided between a support and a silver halide emulsion layer to serve as an antihalation layer, crossover cut layer or layer for screening light from the back side (i.e., shielding layer). Alternatively, the dyestuff used in the present invention can be incorporated in the silver halide emulsion layer to inhibit irradiation. Further, the dyestuff used in the present invention can be provided above the silver halide emulsion layer (outside the silver halide emulsion layer with respect to the support) to serve as a filter layer, particularly a safelight filter layer.

The amount of the dyestuff used in the present invention to be coated in the hydrophilic colloidal layer in the form of solid fine dispersion depends on the kind of the dyestuff, the absorbance required, etc. and can be readily determined by the skilled artisan. The amount of dyestuff is typically from 1 $mg/m^2$ to 300 $mg/m^2$, preferably 3 $mg/m^2$ to 200 $mg/m^2$ per one layer containing dyestuff.

As the hydrophilic colloid, gelatin can be preferably used. The dyestuff used in the present invention can be incorporated in a color photographic light-sensitive material as well as a black-and-white photographic light-sensitive material. Therefore, the desired coated amount of gelatin varies. The amount of gelatin to be coated on the same side of the support as the side containing the dyestuff dispersion is generally from 1.5 $g/m^2$ to 30 $g/m^2$, preferably 1.5 $g/m^2$ to 20 $g/m^2$. The content of gelatin in the layer containing the dyestuff dispersion is preferably 20 $mg/m^2$ to 3 $g/m^2$. particularly from the standpoint of expedited processing, the coated amount of hydrophilic colloid is preferably minimized. In a preferred embodiment, the layer containing a dyestuff dispersion may be a subbing layer provided between the support and the silver halide emulsion layer, wherein the coated amount of hydrophilic colloid in the subbing layer is generally 0.5 $g/m^2$ or less, preferably 20 $mg/m^2$ to 300 $mg/m^2$.

The silver halide photographic light-sensitive material of the present invention may be a double-sided light-sensitive material.

Various kinds of gelatins have been known. In the present invention, suitable examples include lime-treated gelatin, acid-treated gelatin or various modified gelatins.

The solid fine dispersion of the dyestuff used in the present invention can be incorporated, singly or in combination with other solid fine dispersion, in the photographic light-sensitive material as a dyestuff. The solid fine dispersion of the dyestuff used in the present invention can be incorporated in the same layer as, or different layers from, a layer containing other solid fine dyestuff dispersions. By way of example, a mixture of a dyestuff dispersion used in the present invention with a solid fine dispersion of a yellow dyestuff absorbing light of a shorter wavelength than the dyestuff dispersion used in the present invention may be used as an antihalation layer. Alternatively, a mixture of a dyestuff dispersion used in the present invention with a solid fine dispersion of an infrared dyestuff absorbing light of a longer wavelength than the dyestuff dispersion used in the present invention may be used as an antihalation layer. Further, a dyestuff dispersion used in the present invention may be used as an antihalation layer while a solid fine dispersion of a yellow dyestuff absorbing light of a shorter wavelength than the dyestuff dispersion used in the present invention may be used as a filter layer.

Dispersible solid dyestuffs which can be used in combination with a dyestuff dispersion used in the present invention are further described in WO 88/04794, JP-A-4-14033 and Japanese Patent Application No. 3-121749. Any of these dispersible solid dyestuffs can be used.

A solid fine dispersion of, for example, a dyestuff used in the present invention can be incorporated in two or more layers. The dyestuff dispersion used in the present invention is fixed in a specific layer. For example, the dyestuff used in the present invention may be incorporated in an amount required as an antihalation layer, and then incorporated in the silver halide emulsion layer in an amount required for the inhibition of irradiation.

Known water-soluble dyestuffs can be used in combination with the dyestuff used in the present invention, as necessary. Further, an oil-soluble dyestuff can be used in the form of an emulsion dispersion or polymer dispersion in

combination with the dyestuff used in the present invention, as necessary.

On development, the solid dispersion of the dyestuff used in the present invention mainly decomposes and elutes with hydroquinone, sulfite or alkali in the developer, causing no coloring or staining in the photographic image. The time required for decoloration greatly depends on the concentration of hydroquinone and the content of sulfite, alkali or other nucleophilic reagent in the developer or other processing baths, the kind, amount and position of incorporation of the compound used in the present invention, the amount and swelling of the hydrophilic colloid, the extent of agitation, etc. and thus cannot be unequivocally defined. The time required for decoloration can be arbitrarily controlled according to general principles of physical chemistry.

The pH value of the processing solution depends on the kind of processing, i.e., development, bleach or fixing, and is preferably 3.0 to 13.0, more preferably 5.0 to 12.5. Thus, the compound used in the present invention has a dyestuff unit which can be released with a processing solution having such a low pH value.

In the photographic light-sensitive material comprising the light-sensitive silver halide emulsion layer used in the present invention, light-sensitive materials commonly used in the art can be employed, and silver halide emulsions commonly used in the art can similarly be employed. For example, light-sensitive materials and silver halide emulsions as described in JP-A-3-13936 and JP-A-3-13937 can be used. More particularly, silver halide emulsions, light-sensitive materials containing such silver halide emulsions, supports therefor, and processing methods and exposure methods thereof described in JP-A-3-13936, line 8, lower right column, page 8 - line 9, upper left column, page 15, can be similarly employed in the present invention.

The present invention will be further described in the following examples, but the present invention should not be construed as being limited thereto. Percentages are by weight unless otherwise indicated.

EXAMPLE 1

(1) Synthesis of Dyestuff I-1

To a mixture of 26.2 g of 1-(4-carboxyphenyl)-3-methyl-2-pyrazoline-5-one, 14.2 g of glutaconaldehydedianyl hydrochloride and 200 mℓ of N,N-dimethylformamide was added 30.3 g of triethylamine. The mixture was then stirred at room temperature for 1 hour. To the reaction solution was added 100 mℓ of methanol. The reaction solution was then subjected to dust removal by filtration. To the reaction solution was added dropwise a methanol solution of hydrochloric acid (mixture of 53 mℓ of a 36 % concentrated hydrochloric acid and 80 mℓ of methanol) with stirring at a temperature of 20 °C to 25 °C in 15 minutes. After the dropwise addition, the reaction system was further stirred at the same temperature for 30 minutes. The reaction product was filtered off with suction, and then washed with 200 mℓ of methanol three times. The material was then washed with water until the filtrate became neutral. Thus, 83 g of Dyestuff I-1 in wet state (hereinafter referred to as "I-1-A") was obtained (content of Dyestuff I-1: 28.5 %).

(2) Heat treatment

i. Drying (without heating; comparative)

60 g of I-1-A was dried by air blow for 1 week. After dried, the material weighed 17.1 g. The dried material will be hereinafter referred to as "I-1-B".

ii. Heat drying

60 g of Dyestuff I-1-A was heat-dried at a temperature of 60 °C to 70 °C at normal pressure for three days. After dried, the material weighed 17.1 g. The dried material will be hereinafter referred to as "I-1-C".

iii. Heat treatment in solvent

To 10 g of Dyestuff I-1-B was added 60 mℓ of water. The material was then heated under reflux with stirring. The material was cooled to room temperature. The resulting solid content was then filtered off with suction. Thus, 25 g of Dyestuff I-1 was obtained in wet state (content of Dyestuff I-1: 40 %). This product will be hereinafter referred to as "I-1-D".

iv. Heat treatment in the presence of carboxymethyl cellulose

To 10 g of Dyestuff I-1-B was added 100 mℓ of a 1 % aqueous solution of carboxymethyl cellulose. The material was then heated under reflux for 8 hours. The aqueous suspension was then cooled to room temperature. This product

will be hereinafter referred to as "I-1-E".

v. Heat treatment in acetic acid

To 10 g of Dyestuff I-1-B was added 40 mℓ of acetic acid. The material was then heated at a temperature of 105 °C to 110 °C with stirring for 7 hours. The material was cooled to room temperature. The resulting solid content was filtered off with suction. The solid content thus obtained was washed with 100 mℓ of methanol once and then with 50 mℓ of water four times. Thus, 18 g of heat-treated Dyestuff I-1 in wet state (content of Dyestuff I-1: 55.6 %) was obtained. This product will be hereinafter referred to as "I-1-F".

(3) Dispersion

Dyestuffs I-1-A to I-1-F thus obtained were dispersed by the method described below. However, for those which had already contained water or carboxymethyl cellulose (e.g., A, D, E, F), the amount of water or carboxymethyl cellulose was adjusted to obtain the predetermined value.

To 3.75 g (calculated in terms of solid content) o f Dyestuff I-1 was added 37.5 mℓ of a 1 % aqueous solution of carboxymethyl cellulose as a dispersant to obtain a premix. To the premix was added 53.7 mℓ of water. The material was then subjected to dispersion with zirconia beads by means of a horizontal medium dispersing machine (Eiger Motor Mill M-50, manufactured by Eiger Japan Co. Ltd.) for 3 hours. The zirconia beads were removed by filtration. The dispersion was diluted with water until the dyestuff concentration reached 2 %.

(4) Evaluation of photographic properties

i. Preparation of specimen

A silver halide photographic material was prepared in accordance with the method described in JP-A-3-249752, line 7, upper left column, page 24 - line 20, lower left column, page 25. However, Dyestuff I-1 used in the present invention in the form of a dispersion formed by the above mentioned method was used instead of Dyestuff I-1 described in JP-A-3-249752, line 18, upper right column, page 24, in an amount of 120 mg/$m^2$ as calculated in terms of Dyestuff I-1.

ii. Evaluation of storage stability

The specimen thus obtained was then stored at a temperature of 40 °C and 80 % RH for 3 days. The specimen was then subjected to the processing set forth in the table in JP-A-3-249752, line 8, lower right column, page 25 - upper left column, page 26. The sensitivity difference was then determined from the specimen which had not been stored as calculated as desensitization degree. The results are set forth in Table 1.

Table 1

| Specimen No. | Dyestuff dispersion | Heat treatment before dispersion | Heat treatment after dispersion *) | Desensitization degree |
|---|---|---|---|---|
| 1 (comparative) | None | - | - | 0.03 |
| 2 ( " ) | I-1-A | No | No | 0.16 |
| 3 ( " ) | I-1-B | No | " | 0.15 |
| 8 (present invention) | I-1-A | No | Yes | 0.03 |
| 9 ( " ) | I-1-D | Yes | " | 0.03 |
| 10 ( " ) | I-1-E | " | " | 0.03 |

*) Heat treatment after dispersion

An aqueous dispersion with a dyestuff concentration of 2 % was heat-treated with stirring at a temperature of 85 °C for 6 hours.

Table 1 shows that the specimens which had not been heat-treated (Specimen Nos. 2 and 3) exhibit a great densensitization degree after storage while the specimens which had been heat-treated (Specimen Nos. 8 to 10) exhibit little desensitization after storage. This shows that heat treatment is effective for the enhancement of the storage stability of the photographic light-sensitive material. It is also shown in Table 1 that these specimens, which had been heat-treated in the presence of an organic compound containing a carboxylic group (Specimen Nos. 8 to 10), exhibit an enhanced storage stability.

EXAMPLE 2

Dispersion was effected in the same manner as in Example 1 except that Dyestuff I-1 was replaced by the dyestuffs set forth in Table 2. Using the dispersions which were heat-treated at a temperature of 85 °C for 6 hours or not heat-treated, silver halide photographic materials were prepared in the same manner as in Example 1. These specimens were then measured for densensitization degree after storage at 40 °C and 80 % RH for 3 days. The results are set forth in Table 2.

Table 2

| Specimen No. | Dyestuff | Heat treatment | Desensitization |
|---|---|---|---|
| 11 (comparative) | I-2 | No | 0.16 |
| 12 (present invention) | " | Yes | 0.03 |
| 13 (comparative) | I-3 | No | 0.17 |
| 14 (present invention) | " | Yes | 0.04 |
| 15 (comparative) | I-5 | No | 0.15 |
| 16 (present invention) | " | Yes | 0.03 |
| 17 (comparative) | I-7 | No | 0.16 |
| 18 (present invention) | " | Yes | 0.03 |
| 19 (comparative) | I-8 | No | 0.15 |
| 20 (present invention) | " | Yes | 0.03 |
| 21 (comparative) | I-10 | No | 0.15 |
| 22 (present invention) | " | Yes | 0.03 |
| 23 (comparative) | I-16 | No | 0.17 |
| 24 (present invention) | " | Yes | 0.03 |
| 25 (comparative) | I-20 | No | 0.14 |
| 26 (present invention) | " | Yes | 0.03 |
| 27 (comparative) | I-21 | No | 0.17 |
| 28 (present invention) | " | Yes | 0.04 |
| 29 (comparative) | I-22 | No | 0.16 |
| 30 (present invention) | " | Yes | 0.04 |
| 31 (comparative) | I-23 | No | 0.18 |

Table 2 (continued)

| Specimen No. | Dyestuff | Heat treatment | Desensitization |
|---|---|---|---|
| 32 (present invention) | " | Yes | 0.04 |
| 33 (comparative) | I-24 | No | 0.16 |
| 34 (present invention) | " | Yes | 0.05 |
| 35 (comparative) | I-25 | No | 0.17 |
| 36 (present invention) | " | Yes | 0.04 |
| 37 (comparative) | I-26 | No | 0.15 |
| 38 (present invention) | " | Yes | 0.04 |
| 39 (comparative) | I-28 | No | 0.20 |
| 40 (present invention) | " | Yes | 0.04 |
| 41 (comparative) | I-31 | No | 0.16 |
| 42 (present invention) | " | Yes | 0.05 |
| 43 (comparative) | I-33 | No | 0.17 |
| 44 (present invention) | " | Yes | 0.05 |

Table 2 shows that even oxonol dyestuffs used in the present invention other than Dyestuff I-1 can also be heat-treated to provide solid fine dispersions which do not deteriorate photographic properties.

EXAMPLE 3

To a mixture of 26.2 g of 1-(4-carboxyphenyl)-3-methyl-2-pyrazoline-5-one, 14.2 g of glutaconaldehydedianyl hydrochloride and 200 mℓ of N,N-dimethylformamide was added 30.3 g of triethylamine. The mixture was then stirred at room temperature for 1 hour. To the reaction solution was added 100 mℓ of methanol. The reaction solution was subjected to dust removal by filtration. To the material was added dropwise a methanol solution of hydrochloric acid (mixture of 53 mℓ of a 36 % concentrated hydrochloric acid and 80 mℓ of methanol) with stirring at a temperature of 20 °C to 25 °C in 15 minutes. After the dropwise addition, the material was further stirred at the same temperature for 30 minutes. The reaction product was filtered off with suction, and then washed with 200 mℓ of methanol three times. The reaction product was then washed with water until the filtrate became neutral. Thus, 83 g of Dyestuff I-1 (hereinafter referred to as Dyestuff (IV)) was obtained in a wet state (content of Dyestuff (IV): 28.5 %).

60 g of Dyestuff (IV) in a wet state was dried by blowing air at room temperature for 1 week. After being dried, the material weighed 17.1 g. This product will be hereinafter referred to as "Dyestuff IV-1".

60 g of Dyestuff (IV) in a wet state was heat-dried at a temperature of 60 °C to 70 °C at normal pressure for 3 days. After being dried, the material weighed 17.1 g. This product will be hereinafter referred to as "Dyestuff IV-2".

To 10 g of Dyestuff IV-1 was added 60 mℓ of water. The reaction system was heated under reflux for 8 hours. The reaction system was cooled to room temperature. The resulting solid content was filtered off with suction. 25 g of Dyestuff (IV) which had been heat-treated was obtained in a wet state (content of Dyestuff (IV): 40 %). This product will be hereinafter referred to as "Dyestuff IV-3".

To 10 g of Dyestuff IV-1 was added 40 mℓ of acetic acid. The reaction system was heated under reflux at a temperature of 105 to 110 °C for 7 hours. The reaction system was cooled to room temperature. The resulting solid content was filtered with suction. The solid content thus obtained was washed with 100 mℓ of methanol once and then with 50 mℓ of water four times to obtain 18 g of heat-treated Dyestuff (IV) in a wet state (content of Dyestuff (IV): 55.6 %). This

product will be hereinafter referred to as "Dyestuff IV-4".

To 10 g of Dyestuff IV-1 was added 100 mℓ of a 1 % aqueous solution of carboxymethyl cellulose. The reaction system was heated under reflux for 8 hours. The reaction system was cooled to room temperature to obtain an aqueous suspension. This product will be hereinafter referred to as "Dyestuff IV-5".

EXAMPLE 4

The dyestuff powders prepared in Example 3 (the dyestuffs in the form of a wet suspension were dried at room temperature) were lightly ground in an agate mortar and then applied to an X-ray diffraction measuring holder. The specimens were then measured by a Rotor Flex Diffractometer (manufactured by Rikagaku Denki K.K.) at a diffraction angle 2 θ of 5 ° to 60 °.

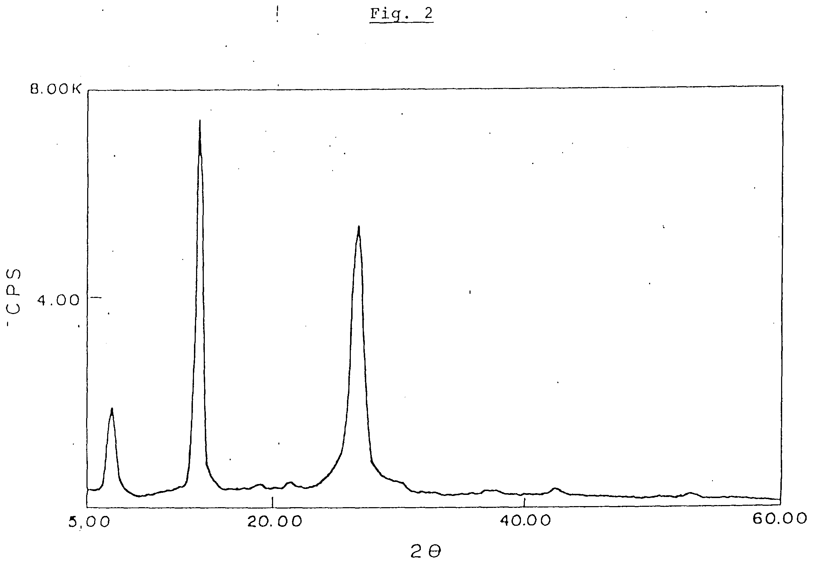

Typical diffraction charts thus obtained are shown in Figs. 1 and 2. Although there is some deviation, three definite peaks are observed with the oxonol dyestuff at about 7 °, about 14 ° and about 26 ° to 27 °. The ratio of the intensity of primary diffraction at a diffraction angle 2 θ of about 26 to 27 degree to that of secondary diffraction at a diffraction angle 2 θ of about 14 degree is set forth in Table 3. The dyestuffs prepared according to the synthesis method used in the present invention exhibits as small a diffraction intensity ratio as 1.30 or less. Unlike the comparative specimens prepared according to the conventional synthesis method, the dyestuffs prepared according to the present invention showed a quite unexpected change.

Table 3

| Dyestuff | Diffraction intensity at diffraction angle 2 θ of about 26 to 27 degree / Diffraction intensity at diffraction angle 2 θ of about 14 degree |
|---|---|
| IV-1 | 1.44 |
| IV-2 | 1.20 |
| IV-3 | 1.07 |
| IV-4 | 0.72 |
| IV-5 | 0.91 |

EXAMPLE 5

Preparation of Dispersion A (comparative)

A dispersion was prepared in accordance with Example 1 in JP-A-52-92716. Specifically, to 50 g of Dyestuff IV-1 were added 1.34 g of sodium oleyl methyl tauride as a dispersant and a small amount of water to obtain a premix. Water was added to the premix to make 500 g. The material was then subjected to dispersion with Ottawa sand as a dispersant by a sand grinder for 4 hours. After dispersion, the material was diluted with water to prepare Dispersion A with a dyestuff concentration of 2 %.

Preparation of Dispersion B (comparative)

A dispersion was prepared in accordance with an example in WO 88/04794. Specifically, to 20 g of Dyestuff IV-1 were added 72 mℓ of a 5 % aqueous solution of Triton X-200R (available from Rohm & Haas) as a dispersant. To the mixture was added water to make 500 g. The material was then subjected to dispersion with zirconia beads by an oscillating ball mill for 10 hours. After being dispersed, the material was diluted with water to prepare Dispersion B with a dyestuff concentration of 2 %.

Preparation of Dispersions C and E

A dispersion was prepared in accordance with Example 1. Specifically, to 3.75 g of Dyestuff IV-2 was added 37.5 mℓ of a 1 % aqueous solution of carboxymethyl cellulose to prepare a premix. To the premix was added 53.7 mℓ of water. The material was then subjected to dispersion with zirconia beads by a horizontal medium dispersing machine (Eiger Motor Mill M-50, manufactured by Eiger Japan Co. Ltd.) for 3 hours. The dispersion was then diluted with water to obtain Dispersion C with a dyestuff concentration of 2 %.

Dyestuff IV-4 was similarly dispersed with the dyestuff solid concentration corrected to prepare Dispersion E.

Preparation of Dispersions G and H (according to the present invention)

Dispersions A and E were each partially measured out. These dispersions were each stored at a temperature of 85°C for 6 hours. The heated dispersions will be hereinafter referred to as "Dispersions G and H".

EXAMPLE 6

Preparation of coat film specimens 4-1, 4-2, 4-7 and 4-8

On a 180-µm gelatin-undercoated polyethylene terephthalate support were coated the following components to prepare coat films:

| | |
|---|---|
| Gelatin | 4.0 g/m$^2$ |
| Dispersion of Dyestuff (IV) | 70 mg/m$^2$ (in terms of solid content of dyestuff) |
| Potassium polystyrenesulfonate | 25 mg/m$^2$ |
| Sodium dodecylbenzesulfonate | 10 mg/m$^2$ |
| 1,2-Bis(vinylsulfonylacetamide)ethane | 80 mg/m$^2$ |

The specimens comprising Dispersions A, B, G and H will be hereinafter referred to as "coat film specimens 4-1, 4-2, 4-7 and 4-8, respectively.

EXAMPLE 7

Measurement of spectral absorpton spectrum

A fresh batch of the coat film specimens 4-1, 4-2, 4-7 and 4-8 prepared in Example 6 were measured for spectral absorption spectrum. Another batch of these specimens were stored under heat and moisture conditions of 50 °C and 80 % RH for 3 days before the measurement of spectral absorption spectrum. The measurement was effected at a wavelength of 360 nm to 800 nm by means of a Type U-3210 spectrophotometer available from Hitachi, Ltd.

It was found that different dispersions exhibit quite different absorbances at 530 nm and 680 nm even though they contain the same compound. It was also found that the specimens which had been stored under wet conditions exhibit a reduced absorbance at 680 nm and an increased absorbance at 630 nm. This proves that heat and moisture can accelerate the dissociation of some dyestuffs.

Table 4 provides the absorbance of the fresh specimens at 530 nm and 680 nm and the ratio of the absorbance of these specimens at 680 nm to that at 530 nm, and the change in the absorbance at 630 nm of these specimens after storage under wet conditions.

Table 4

| Coat film No. | Dispersion | Dyestuff | Fresh absorbance | | | ΔAbs 630 (Wet - Fresh) |
|---|---|---|---|---|---|---|
| | | | 530nm | 680nm | $\frac{680nm}{530nm}$ | |
| 4-1(comparative) | A | IV-1 | 0.451 | 0.358 | 0.793 | 0.167 |
| 4-2( " ) | B | IV-1 | 0.428 | 0.400 | 0.934 | 0.207 |
| 4-7(present invention) | G | IV-1 | 0.472 | 0.223 | 0.472 | 0.103 |
| 4-8( " ) | H | IV-4 | 0.571 | 0.142 | 0.249 | 0.013 |

Judging from the fact that they exhibit almost the same absorption spectrum as that shown in the absorption spectrum graph described in JP-A-52-92716, the coated film specimens 4-1 and 4-2, which have been prepared by the comparative synthesis and dispersion methods, are considered to be known dispersions of Dyestuff (IV). It can be seen that these known dispersions exhibit a relatively high absorbance at 680 nm and a big absorbance change after storage under wet conditions, whereas the dispersions prepared according to the present invention exhibit a relatively low absorbance at 680 nm and a small absorbance change after storage under wet conditions.

EXAMPLE 8

In order to examine the properties of these dispersions in the photographic light-sensitive materials, the following

silver halide emulsions were prepared.

| Preparation of raw emulsion # 1 | |
|---|---|
| Solution I (75 °C) | |
| Deashed inert gelatin | 24 g |
| Distilled water | 90 mℓ |
| KBr | 4 g |
| KI | 1.7 g |
| 10 % Aqueous solution of phosphoric acid | 2 mℓ |
| Sodium benzenesulfinate | 5 x $10^{-2}$ mol |
| 1,3-Dimethylimidazolidine-2-thione | 2.5 x $10^{-3}$ g |
| Solution II (35 °C) | |
| Silver nitrate | 170 g |
| Distilled water to make | 1,000 mℓ |
| Solution III (35 °C) | |
| KBr | 230 g |
| 0.001 % Aqueous solution of potassium hexachloroiridiumate (III) | 2 mℓ |
| Distilled water to make | 1,000 mℓ |
| Solution IV (room temperature) | |
| Potassium hexacyanoferrocyanate (II) | 3.0 g |
| Distilled water to make | 100 mℓ |

To Solution I were simultaneusly added Solution II and Solution III with vigorous stirring in 45 minutes. When Solution II was entirely added to the system, a monodisperse emulsion of cubic grains having an average grain diameter of 0.28 µm was eventually obtained.

In this procedure, the rate at which Solution III is added to the system was adjusted with respect to the addition of Solution II such that the pAg value of the mixture was kept at 7.50. Solution IV was added to the system at 5 minutes from 7 minutes after the beginning of the addition of Solution II. After the completion of the addition of Solution II, sedimentation was immediately conducted for washing and desalting. The emulsion was then dispersed in an aqueous solution containing 100 g of deashed inert gelatin. To the emulsion were then added sodium thiosulfate and chloroauric acid tetrahydrate in an amount of 34 mg per mol of silver each so that the pH value and pAg value of the system were adjusted to 7.0 and 8.9 (40 °C), respectively. To the emulsion were then added 5 mg of sodium thiosulfate, 3 mg of N, N-dimethylthiourea and 10 mg of chloroauric acid. The emulsion was then subjected to chemical sensitization at a temperature of 75 °C for 60 minutes to obtain a surface latent image type silver halide emulsion. To this emulsion were added 50 mg of 2-methyl-4-hydroxy-1,3,3a,7-tetrazaindene and 100 ppm of phenoxyethanol as stabilizers.

On a 100-µm thick polyethylene terephthalate (PET) support which had been previously corona-discharged on the surface thereof to enhance the adhesion to a hydrophilic colloidal layer was coated a first subbing layer comprising a styrene-butadiene latex. On the first subbing layer was then coated a second subbing layer comprising gelatin in an amount of 0.08 g/m$^2$. On the second subbing layer were then coated an antihalation layer, an emulsion layer, and a protective layer in sequence as mentioned below to prepare light-sensitive sheets 1 to 11.

light-sensitive sheet 1

| Antihalation layer | |
|---|---|
| Gelatin | 1,500 mg/m$^2$ |
| Dispersion A | 120 mg/m$^2$ (in terms of Dyestuff (IV)) |
| Potassium polystyrenesulfonate | 30 mg/m$^2$ |
| Sodium dodecylbenzenesulfonate | 8 mg/m$^2$ |
| Proxel® | 15 mg/m$^2$ |
| 1,2-Bis(vinylsulfonylacetamide)ethane | 65 mg/m$^2$ |

The coating solution thus prepared was adjusted with a 2 % aqueous solution of phosphoric acid to pH 5.6 before coating.

Emulsion layer

| | |
|---|---|
| Silver halide emulsion | 1,500 $mg/m^2$ (in terms of silver) |
| | 1,550 $mg/m^2$ (in terms of gelatin) |
| Sensitizing dye | 21 $mg/m^2$ |

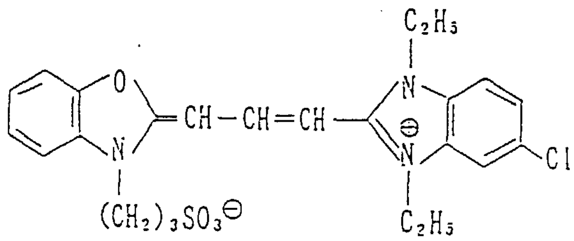

| | |
|---|---|
| 5-Methylbenzotriazole | 3.6 $mg/m^2$ |
| Sodium dodecylbenzenesulfonate | 4.4 $mg/m^2$ |
| Potassium polystyrenesulfonate | 30 $mg/m^2$ |
| Polyethyl acrylate latex | 200 $mg/m^2$ (in terms of solid content) |
| 1,2-Bis(vinylsulfonylacetamide)ethane | 66 $mg/m^2$ |

The coating solution thus prepared was adjusted with a 2 % aqueous solution of phosphoric acid to pH 5.8 before coating.

| Protective layer | |
|---|---|
| Gelatin | 500 $mg/m^2$ |
| Colloidal silica | 100 $mg/m^2$ |
| Liquid paraffin | 23 $mg/m^2$ |
| Barium strontium sulfate (average grain diameter: 1.5 μm) | 13 $mg/m^2$ |
| Proxel® | 2 $mg/m^2$ |

(continued)

| Protective layer | |
|---|---|
| N-perfluorooctanesulfonyl-N-propylglycine potassium | 2 mg/$m^2$ |
| $C_9H_{19}$-($C_6H_4$)-O-{$CH_2CH(OH)CH_2O$}$_7$H | 6 mg/$m^2$ |
| 1,2-Bis(vinylsulfonylacetamide)ethane | 22 mg/$m^2$ |

The coating solution thus prepared exhibited a pH value of 6.4.

To the light-sensitive sheet thus prepared was added dropwise 20 μℓ of distilled water. After 1 minute at a temperature of 25 °C, the light-sensitive sheet exhibited a pH value of 6.1 when measured by means of a surface electrode.

Light-sensitive sheets 2, 7 and 8

Light-sensitive sheets 2, 7 and 8 were prepared in the same manner as the light-sensitive sheet 1 except that Dispersion A to be incorporated in the antihalation layer was replaced by Dispersions B, G and H (content of Dyestuff (IV): 120 mg/$m^2$), respectively.

Light-sensitive sheet 10

Light-sensitive sheet 10 was prepared in the same manner as the light-sensitive sheet 1 except that the composition of the antihalation layer was altered as follows:

| Antihalation layer | |
|---|---|
| Gelatin | 1,500 mg/$m^2$ |
| Dispersion E | 80 mg/$m^2$ (in terms of Dyestuff (IV)) |
| Dispersion J | 100 mg/$m^2$ (in terms of Dyestuff (A)) |
| Potassium polystyrenesulfonate | 30 mg/$m^2$ |
| Potassium dodecylbenzenesulfonate | 8 mg/$m^2$ |
| Proxel® | 15 mg/$m^2$ |
| 1,2-Bis(vinylsulfonylacetamide)ethane | 65 mg/$m^2$ |

The coating solution thus prepared was adjusted with a 2 % aqueous solution of phosphoric acid to pH 5.6 before coating.

Dispersion J was prepared from a powdered form of Dyestuff (A) shown below in the same manner as Dispersion B.

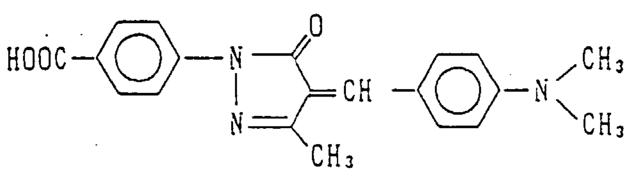

Light-sensitive sheet 11

A comparative light-sensitive sheet was prepared as light-sensitive sheet 11 in the same manner as the light-sensitive sheet 1 except that the antihalation layer excluded the dyestuff dispersion.

These light-sensitive sheets were gradationwise exposed to light through a continuous wedge, and then subjected to negative development. Another batch of these light-sensitive sheets was subjected to forced heat and moisture test at a temperature of 40 °C and a relative humidity of 80 % for 3 days before exposure and development.

Negative development

The negative development was conducted with a commercially available microfilm processing solution (FR-537 developer available from FR Chemicals, U.S.) by means of a Type F-10 deep tank automatic developing machine available from Allen Products, U.S. under the following conditions:

| Step | Processing solution | Temperature | Time |
|---|---|---|---|
| 1. Development | FR-537 (1 : 3) | 30 °C | 60 sec. |
| 2. Washing | Running water | -- | " |
| 3. Fixing | FR-535 (1 : 3) | 30 °C | " |
| 4. Washing | Running water + spray | -- | 120 sec. |
| 5. Drying | Heated air | 60 °C | 60 sec. |

The developed specimens were measured by means of a densitometer. Table 5 shows the sensitivity change at a density of 1.2 after the forced age test with respect to the fresh sensitivity.

Table 5

| Light-sensitive sheet No. | Dispersion | Sensitivity change |
|---|---|---|
| 1 | A (comparative) ) | - 0.26 |
| 2 | B ( " ) | - 0.28 |
| 7 | G (present invention) | - 0.16 |
| 8 | H ( " ) | - 0.02 |
| 11 | -- (comparative) | + 0.02 |

It can be seen that the light-sensitive sheets according to the present invention exhibit a sensitivity drop after storage under heat and moisture conditions as compared with the blank test (light-sensitive sheet 11) but exhibit a drastic improvement as compared with the comparative examples having a great ratio of the absorbance at 680 nm.

EXAMPLE 9

Preparation of light-sensitive sheet 7-1

A 175-µm thick biaxially oriented blue-dyed polyethylene terephthalate film was subjected to corona discharge treatment. On both sides of the polyethylene terephthalate film was coated a hydrophobic polymer layer having the following composition in the following amount by means of a wire bar coater. The coat material was dried at a temperature of 175 °C for 1 minute.

| (Hydrophobic polymer layer) | |
|---|---|
| Butadiene-styrene copolymer latex (butadiene/styrene weight ratio = 31/69) | 0.322 $g/m^2$ |
| 2,4-Dichloro-6-hydroxy-s-triazine sodium | 4.2 $mg/m^2$ |

On the hydrophobic polymer layer was then coated a hydrophilic colloidal layer having the following composition in the following amount by means of a wire bar coater. The coat material was then dried at a temperature of 150 °C for 1 minute.

| (2nd subbing layer: hydrophilic colloidal layer) | |
|---|---|
| Gelatin | 80 $mg/m^2$ |
| Polyethyl acrylate | 20 $mg/m^2$ |
| Dispersion H | 11 $mg/m^2$ (in terms of Dyestuff (IV)) |
| $C_{12}H_{25}O(CH_2CH_2O)_{10}H$ | 4 $mg/m^2$ |
| Proxel® | 0.3 $mg/m^2$ |

On both sides of the coat material were coated a silver halide emulsion layer and a surface protective layer in accordance with the emulsion preparation and coating method as described in Example 1 of JP-A-2-264936. The amount of the emulsion layer and the surface protective layer coated per one side of the coat material were as follows:

| Emulsion layer | |
|---|---|
| Coated amount of silver | 1.9 g/m$^2$ |
| Coated amount of gelatin | 1.2 g/m$^2$ |

Surface protective layer

| | |
|---|---|
| Gelatin | 0.61 g/m$^2$ |
| Dextran (average molecular weight: 39,000) | 0.61 g/m$^2$ |
| Sodium polyacrylate (average molecular weight: 41,000) | 70 mg/m$^2$ |
| Matting agent (average grain diameter: 3.5 μm) | |
| 9 : 1 Coplymer of polymethyl methacrylate and methacrylic acid | 0.06 g/m$^2$ |
| 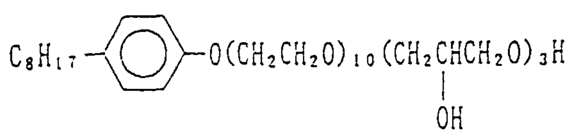 | 60 mg/m$^2$ |
| 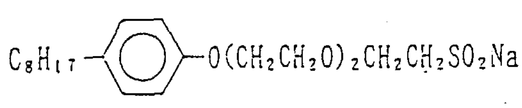 | 20 mg/m$^2$ |
| 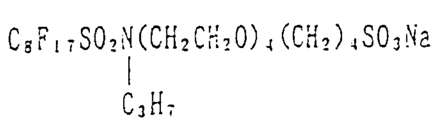 | 2 mg/m$^2$ |

$$C_8F_{17}SO_2\underset{\displaystyle C_3H_7}{\underset{|}{N}}(CH_2CH_2O)_{15}H$$

5 mg/m²

4-Hydroxy-6-methyl-1,3,3a,7-tetrazaindene

15.5 mg/$m^2$

As a film hardener, 1,2-bis(sulfonylacetamide)ethane was coated in an amount of 56 mg/$m^2$ per one side.

Preparation of light-sensitive sheet 7-2

Light-sensitive sheet 7-2 was prepared in the same manner as the light-sensitive sheet 7-1 except that Dispersion H to be incorporated in the 2nd subbing layer was replaced by Dispersion B.

Preparation of light-sensitive sheet 7-3

A blank light-sensitive sheet 7-3 was prepared in the same manner as the light-sensitive sheet 7-1 except that the 2nd subbing layer was free of Dispersion H.

Evaluation of photographic properties

A fresh batch of these light-sensitive sheets were prepared. Another batch of these light-sensitive sheets were stored under the conditions of 50 °C and 68 % RH for 5 days. These light-sensitive sheets were each sandwiched between HR-4 screen available from Fuji Photo Film Co., Ltd. and a black paper in close contact, exposed to X-ray through a water phantom (10 cm), and then subjected to the following processing steps.

| | |
|---|---|
| Development | 35 °C x 6.3 sec. |
| Fixing | 31 °C x 6.7 sec. |
| Squeeze | 15 °C x 4 sec. |
| Drying | 60 °C x 8 sec. |
| Dry-to-dry processing time 29 sec. | |

The developer and fixing solution used had the following compositions:

| Developer | |
|---|---|
| Potassium hydroxide | 29 g |
| Potassium sulfite | 44.2 g |
| Sodium hydrogencarbonate | 7.5 g |
| Boric acid | 1.0 g |
| Diethylene glycol | 12 g |
| Ethylenediaminetetraacetic acid | 1.7 g |
| 5-Methylbenzotriazole | 0.06 g |
| Hydroquinone | 25 g |
| Glacial acetic acid | 18 g |
| Triethylene glycol | 12 g |
| 5-Nitroindazole | 0.25 g |
| 1-Phenyl-3-pyrazolidoneglutaraldehyde (50 wt/wt %) | 9.86 g |
| Sodium metabisulfite | 12.6 g |

(continued)

| Developer | |
|---|---|
| Potassium bromide | 3.7 g |
| Water to make | 1.0 ℓ |

| Fixing solution | |
|---|---|
| Ammonium thiosulfate (70 wt/vol %) | 200 mℓ |
| Disodium ethylenediaminetetraacetate dihydrate | 0.02 g |
| Sodium sulfite | 15 g |
| Boric acid | 10 g |
| Sodium hydroxide | 6.7 g |
| Glacial acetic acid | 15 g |
| Aluminum sulfate | 10 g |
| 36 N sulfuric acid | 3.9 g |
| Water to make | 1 ℓ |
| pH | 4.25 |

After processing, the emulsion layer was completely removed from the specimens on the side which had been in close contact with the black paper. The specimens were then subjected to sensitometry to determine fog and sensitivity at a density of (fog density + 0.5).

The results as tabulated in Table 6 show that the dyestuff dispersions prepared according to the present invention provide a high sensitivity under fresh conditions and a small sensitivity drop and an small fog increase after storage under heat and moisture conditions. All these results are close to those obtained in the blank test. The synthesis methods which have heretofore been known probably make the dyestuff easily diffusable into the emulsion layer, causing a sensitivity drop and fog increase. Thus, the superior effects of the present invention can be readily seen.

Table 6

| Light-sensitive sheet No. | Relative sensitivity ($S_{0.5}$) | | | Fog | | |
|---|---|---|---|---|---|---|
| | Fresh | 50°C68%RH | Change | Fresh | 50°C68%RH | Change |
| 7-1 (present invention) | 1.36 | 1.29 | -0.07 | 0.176 | 0.185 | +0.009 |
| 7-2 (comparative) | 1.33 | 1.15 | -0.18 | 0.189 | 0.219 | +0.030 |
| 7-3 (comparative blank) | 1.38 | 1.34 | -0.04 | 0.173 | 0.179 | +0.006 |

EXAMPLE 10

Preparation of Specimen 801

On a 127-µm thick undercoated cellulose triacetate film were coated various layers having the following compositions to prepare a multi-layer color photographic light-sensitive material as Specimen 801. The figure indicates the added amount per $m^2$. The effects of the compounds added are not limited to their description.

| 1st layer: antihalation layer | |
|---|---|
| Black colloidal layer | 0.20 g |
| Gelatin | 1.9 g |
| Ultraviolet absorbent U-1 | 0.1 g |
| Ultraviolet absorbent U-3 | 0.04 g |
| Ultraviolet absorbent U-4 | 0.1 g |
| High boiling organic solvent Oil-1 | 0.1 g |
| Solid fine dispersion of Dyestuff E-1 (added in the form of Dispersion B of Dyestuff IV used in the present invention) | 0.1 g |

| 2nd layer: interlayer | |
|---|---|
| Gelatin | 0.40 |
| Compound Cpd-C | 5 mg |
| Compound Cpd-J | 5 mg |
| Compound Cpd-K | 3 mg |
| High boiling organic solvent Oil-3 | 0.1 g |
| Dyestuff D-4 | 0.4 mg |
| Emulsion D | 0.4 g (in terms of silver) |
| Gelatin | 1.1 g |
| Coupler C-1 | 0.3 g |
| Coupler C-2 | 0.1 g |
| Coupler C-3 | 0.7 g |
| Additive P-1 | 0.1 g |

| 7th layer: interlayer | |
|---|---|
| Gelatin | 0.6 g |
| Additive M-1 | 0.3 g |
| Color stain inhibitor Cpd-1 | 2.6 mg |
| Ultraviolet absorbent U-1 | 0.01 g |
| Ultraviolet absorbent U-2 | 0.002 g |
| Ultraviolet absorbent U-5 | 0.01 g |
| Dyestuff D-1 | 0.02 g |
| Dyestuff D-5 | 0.02 g |
| Compound Cpd-C | 5 mg |
| Compound Cpd-J | 5 mg |
| Compound Cpd-K | 5 mg |
| High boiling organic solvent Oil-1 | 0.02 g |

| 8th layer: interlayer | |
|---|---|
| Exteriorly and internally-fogged silver bromoiodide emulsion (average grain diameter: 0.06 μm; fluctuation coefficient: 16 %; AgI content: 0.3 mol %) | 0.02 g (in terms of silver) |
| Gelatin | 1.0 g |
| Additive P-1 | 0.2 g |
| Color stain inhibitor Cpd-A | 0.1 g |

| 9th layer: low sensitivity green-sensitive emulsion layer | |
|---|---|
| Emulsion E | 0.1 g (in terms of silver) |
| Emulsion F | 0.2 g (in terms of silver) |
| Emulsion G | 0.2 g (in terms of silver) |
| Gelatin | 0.5 g |
| Coupler C-4 | 0.1 g |
| Coupler C-7 | 0.05 g |
| Coupler C-8 | 0.20 g |
| Compound Cpd-B | 0.03 g |
| Compound Cpd-C | 10 mg |
| Compound Cpd-D | 0.02 g |
| Compound Cpd-E | 0.02 g |

(continued)

| 9th layer: low sensitivity green-sensitive emulsion layer | |
|---|---|
| Compound Cpd-F | 0.02 g |
| Compound Cpd-G | 0.02 g |
| Compound Cpd-L | 0.05 g |
| High boiling organic solvent Oil-1 | 0.1 g |
| High boiling organic solvent Oil-2 | 0.1 g |

| 10th layer: middle sensitivity green-sensitive emulsion layer | |
|---|---|
| Emulsion G | 0.3 g (in terms of silver) |
| Emulsion H | 0.1 g (in terms of silver) |
| Gelatin | 0.6 g |
| Coupler C-4 | 0.1 g |
| Coupler C-7 | 0.2 g |
| Coupler C-8 | 0.1 g |
| Compound Cpd-B | 0.03 g |
| Compound Cpd-D | 0.02 g |
| Compound Cpd-E | 0.02 g |
| Compound Cpd-F | 0.05 g |
| Compound Cpd-G | 0.05 g |
| Compound Cpd-L | 0.05 g |
| High boiling organic solvent Oil-2 | 0.01 g |

| 11th layer: high sensitivity green-sensitive emulsion layer | |
|---|---|
| Emulsion I | 0.5 g (in terms of silver) |
| Gelatin | 1.0 g |
| Coupler C-4 | 0.3 g |
| Coupler C-7 | 0.1 g |
| Coupler C-8 | 0.1 g |
| Compound Cpd-B | 0.08 g |
| Compound Cpd-C | 5 mg |
| Compound Cpd-D | 0.02 g |
| Compound Cpd-E | 0.02 g |
| Compound Cpd-F | 0.02 g |
| Compound Cpd-G | 0.02 g |
| Compound Cpd-J | 5 mg |
| Compound Cpd-K | 5 mg |
| Compound Cpd-L | 0.05 g |
| High boiling organic solvent Oil-1 | 0.02 g |
| High boiling organic solvent Oil-2 | 0.02 g |

| 12th layer: interlayer | |
|---|---|
| Gelatin | 0.6 g |

| 13th layer: yellow filter layer | |
|---|---|
| Yellow colloidal silver | 0.07 g (in terms of silver) |

(continued)

| 13th layer: yellow filter layer | |
|---|---|
| Gelatin | 1.1 g |
| Color stain inhibitor Cpd-A | 0.01 g |
| High boiling organic solvent Oil-1 | 0.01 g |
| Solid fine dispersion of Dyestuff E-2 | 0.05 g |

| 14th layer: interlayer | |
|---|---|
| Gelatin | 0.6 g |

| 15th layer: low sensitivity blue-sensitive emulsion layer | |
|---|---|
| Emulsion J | 0.2 g (in terms of silver) |
| Emulsion K | 0.3 g (in terms of silver) |
| Emulsion L | 0.1 g (in terms of silver) |
| Gelatin | 0.8 g |
| Coupler C-5 | 0.2 g |
| Coupler C-6 | 0.1 g |
| Coupler C-10 | 0.4 g |

| 16th layer: middle sensitivity blue-sensitive emulsion layer | |
|---|---|
| Emulsion L | 0.1 g (in terms of silver) |
| Emulsion M | 0.4 g (in terms of silver) |
| Gelatin | 0.9 g |
| Coupler C-5 | 0.3 g |
| Coupler C-6 | 0.1 g |
| Coupler C-10 | 0.1 g |

| 17th layer: high sensitivity blue-sensitive emulsion layer | |
|---|---|
| Emulsion N | 0.4 g (in terms of silver) |
| Gelatin | 1.2 g |
| Coupler C-5 | 0.1 g |
| Coupler C-6 | 0.1 g |
| Coupler C-10 | 0.6 g |
| High boiling organic solvent Oil-2 | 0.1 g |

| 18th layer: 1st protective layer | |
|---|---|
| Gelatin | 0.7 g |
| Ultraviolet absorbent U-1 | 0.2 g |
| Ultraviolet absorbent U-2 | 0.05 g |
| Ultraviolet absorbent U-5 | 0.3 g |
| Formalin scavenger Cpd-H | 0.4 g |
| Dyestuff D-1 | 0.1 g |
| Dyestuff D-2 | 0.05 g |
| Dyestuff D-3 | 0.1 g |

| 19th layer: 2nd protective layer | |
|---|---|
| Colloidal silver | 0.1 mg (in terms of silver) |
| Emulsion of finely divided silver bromoiodide grains (average grain diameter: 0.06 µm; AgI content: 1 mol %) | 0.1 g (in terms of silver) |
| Gelatin | 0.4 g |

| 20th layer: 3rd protective layer | |
|---|---|
| Gelatin | 0.4 g |
| Polymethyl methacrylate (average grain diameter: 1.5 µm) | 0.1 g |
| 4 : 6 Copolymer of methyl methacrylate and acrylic acid (average grain diameter: 1.5 µm) | 0.1 g |
| Silicone oil | 0.03 g |
| Surface active agent W-1 | 3.0 mg |
| Surface active agent W-2 | 0.03 g |

Besides the above mentioned compositions, additives F-1 to F-8 were incorporated in all the emulsion layers. Besides the above mentioned compositions, to each of the various layers were added a gelatin hardener H-1, and coating and emulsifying surface active agents W-3, W-4, W-5 and W-6.

Further, as preservatives and mildewproofing agents there were added phenol, 1,2-benzisothiazoline-3-one, 2-phenoxyethanol, phenethyl alcohol, and p-benzoic butyl ester.

The silver iodobromide emulsions used for Specimen 801 are as follows.

| Emulsion | Characterristic of grains | Average grain size corresponding to a circle | Floculation coefficient | Content of AgI |
|---|---|---|---|---|
| | | (µm) | (%) | (%) |
| A | monodisperse tetradecahedral grain | 0.28 | 16 | 3.7 |
| B | monodisperse cubic inner-latent type grain | 0.30 | 10 | 3.3 |
| C | monodisperse tabular grain mean aspect ratio 4.0 | 0.38 | 18 | 5.0 |
| D | tabular grain mean aspect ratio 8.0 | 0.68 | 15 | 2.0 |
| E | monodisperse cubic grain | 0.20 | 17 | 4.0 |
| F | monodisperse cubic grain | 0.23 | 16 | 4.0 |
| G | monodisperse cubic inner-latent type grain | 0.28 | 11 | 3.5 |
| H | monodisperse cubic inner-latent type grain | 0.32 | 9 | 3.5 |
| I | tabular grain mean aspect ratio 8.0 | 0.80 | 28 | 1.5 |

(continued)

| Emulsion | Characterristic of grains | Average grain size corresponding to a circle | Floculation coefficient | Content of AgI |
|---|---|---|---|---|
| | | (µm) | (%) | (%) |
| J | monodisperse tetradecahedral grain | 0.30 | 18 | 4.0 |
| K | monodisperse tabular grain mean aspect ratio 7.0 | 0.45 | 17 | 4.0 |
| L | monodisperse cubic inner-latent type grain | 0.46 | 14 | 3.5 |
| M | monodisperse tabular grain mean aspect ratio 10.0 | 0.55 | 13 | 4.0 |
| N | tabular grain mean aspect ratio 12.0 | 1.00 | 33 | 1.3 |

| Spectral Sensitization of Emulsions A to N | | |
|---|---|---|
| Emulsion | Added sensitizing dye | Added amount per mole of silver halide (g) |
| A | S-2 | 0.025 |
| | S-3 | 0.25 |
| | S-8 | 0.01 |
| B | S-1 | 0.01 |
| | S-3 | 0.25 |
| | S-8 | 0.01 |
| C | S-1 | 0.01 |
| | S-2 | 0.01 |
| | S-3 | 0.25 |
| | S-8 | 0.01 |
| D | S-2 | 0.01 |
| | S-3 | 0.10 |
| | S-8 | 0.01 |
| E | S-4 | 0.5 |
| | S-5 | 0.1 |
| F | S-4 | 0.3 |
| | S-5 | 0.1 |
| G | S-4 | 0.25 |
| | S-5 | 0.08 |
| | S-9 | 0.05 |
| H | S-4 | 0.2 |
| | S-5 | 0.06 |

(continued)

| Spectral Sensitization of Emulsions A to N | | |
|---|---|---|
| Emulsion | Added sensitizing dye | Added amount per mole of silver halide (g) |
| | S-9 | 0.05 |
| I | S-4 | 0.3 |
| | S-5 | 0.07 |
| J | S-9 | 0.1 |
| | S-7 | 0.2 |
| | S-6 | 0.05 |
| K | S-6 | 0.2 |
| | S-5 | 0.05 |
| L | S-6 | 0.22 |
| | S-5 | 0.06 |
| M | S-6 | 0.15 |
| | S-5 | 0.04 |
| N | S-6 | 0.22 |
| | S-5 | 0.06 |

C - 1

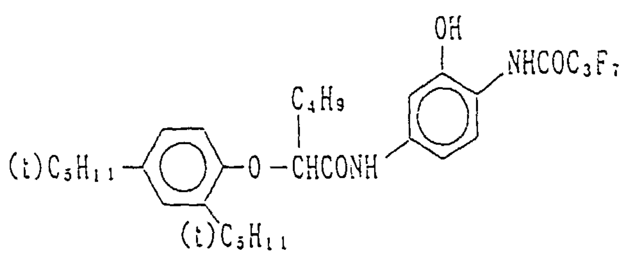

C - 2

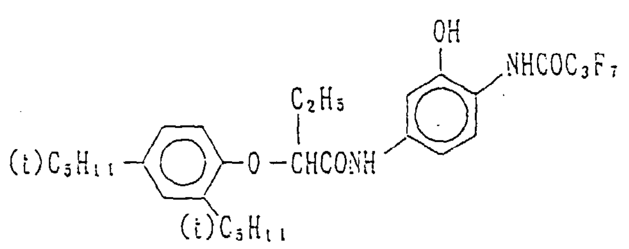

C-3

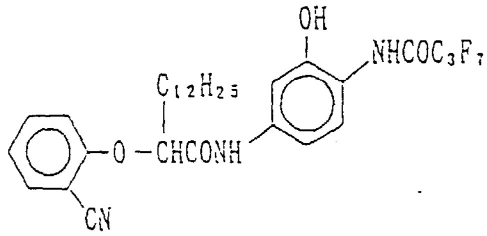

C-4

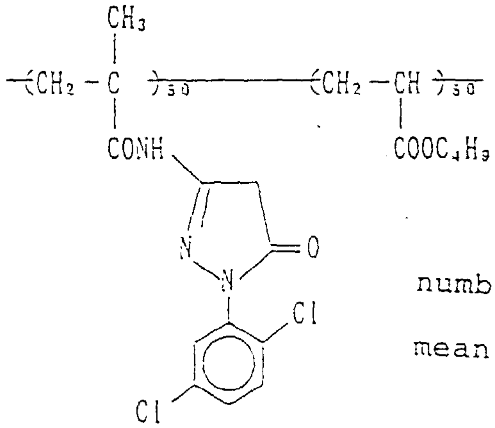

number : % by weight

mean molecular weight : about 25,000

C-5

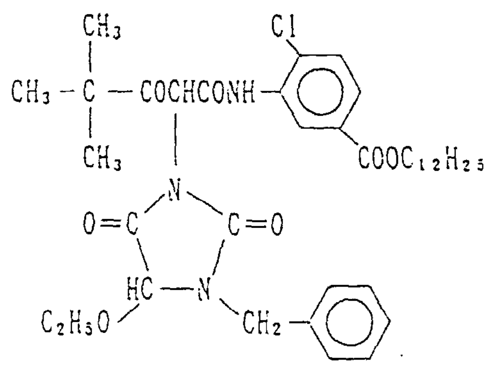

C-6

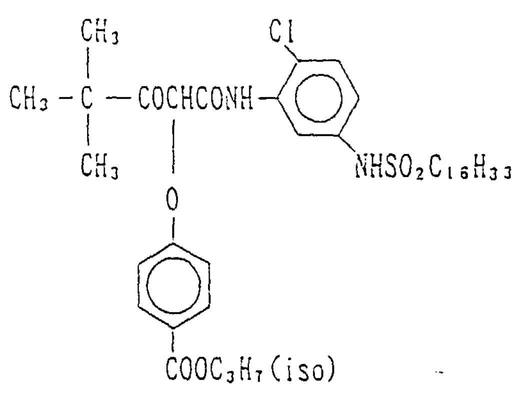

C－7

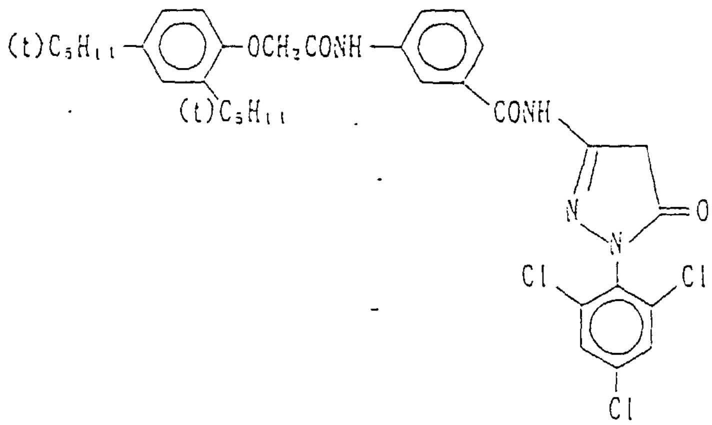

C－8

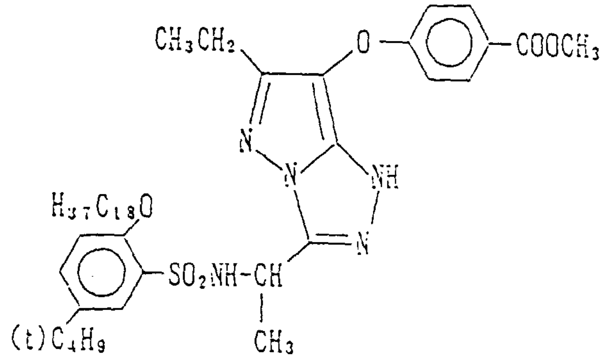

C－9

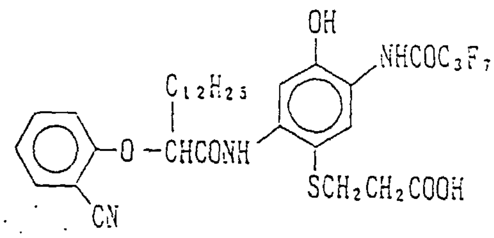

C－10

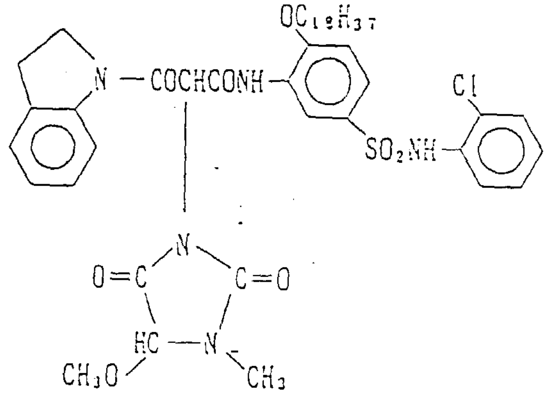

Oil-1 Dibutyl phthalate

Oil-2 Tricresyl phosphate

Oil-3

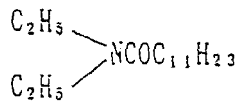

Cpd-A

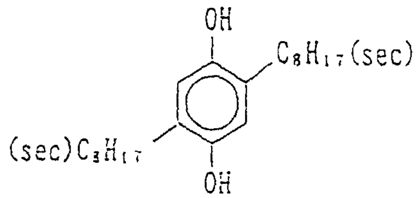

Cpd-B

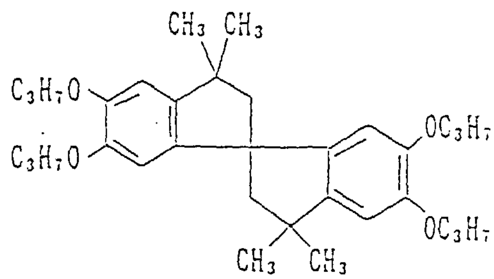

Cpd-C

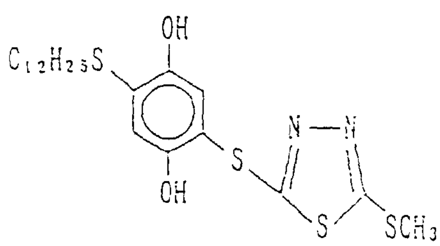

Cpd-D

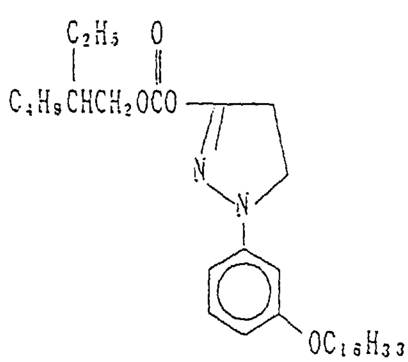

Cpd-E

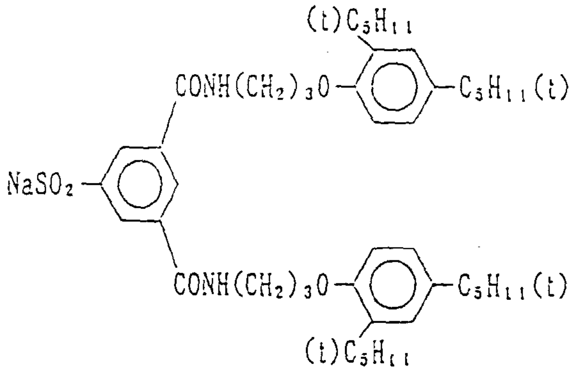

Cpd-F

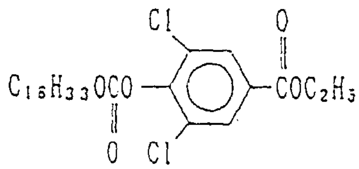

Cpd-G

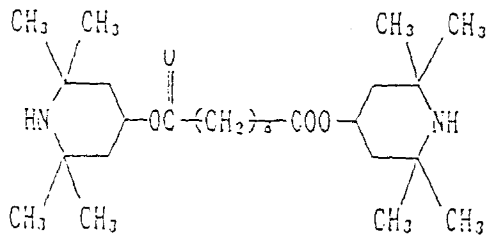

Cpd-H

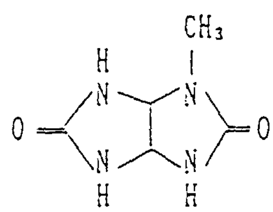

Cpd-I

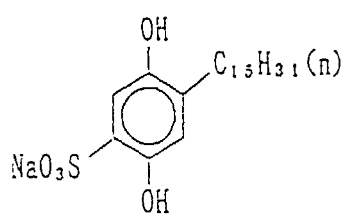

Cpd-J

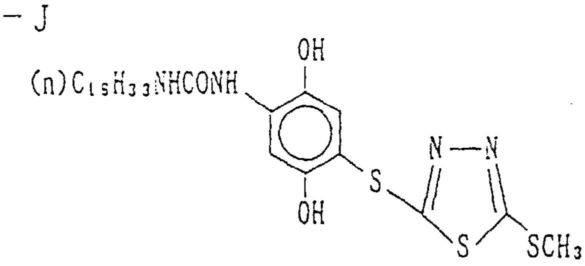

Cpd-K

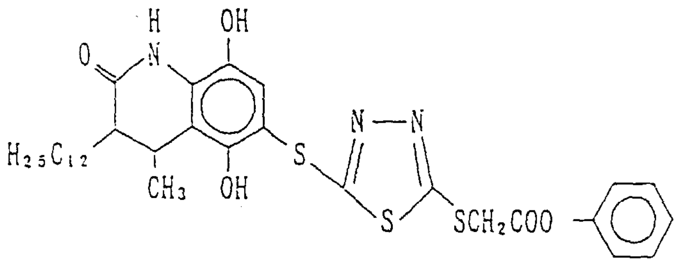

Cpd-L

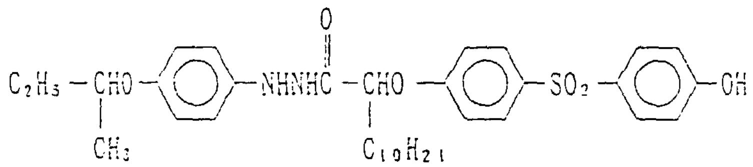

U-1

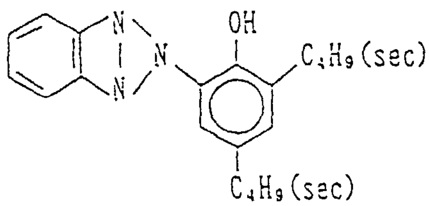

U-2

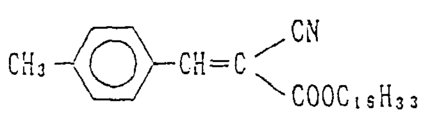

U－3

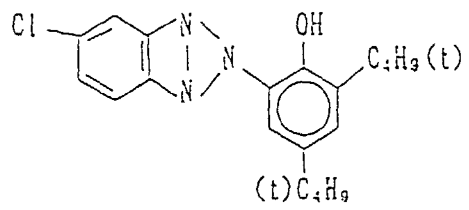

U－4

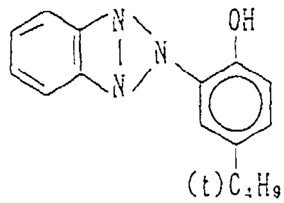

U－5

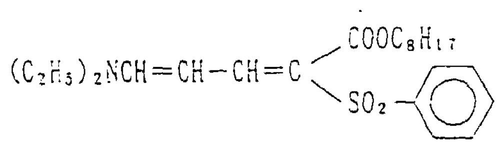

S－1

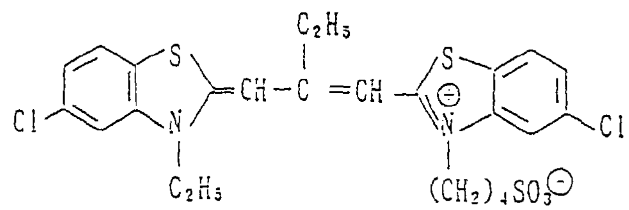

S－2

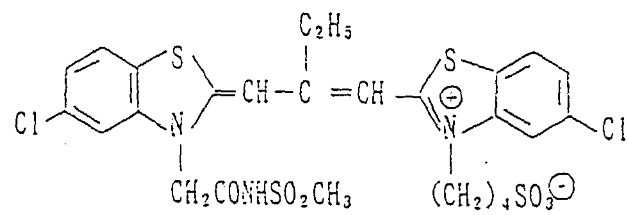

S − 3

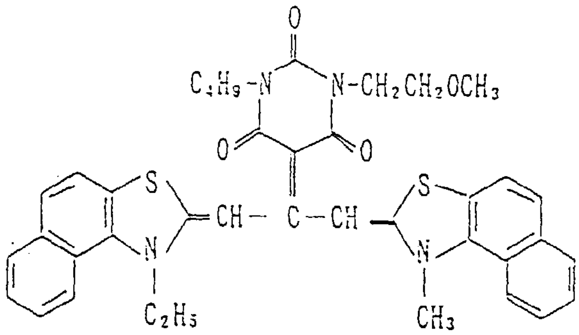

S − 4

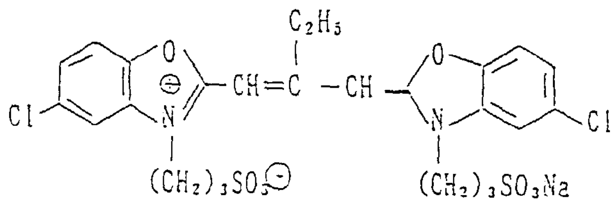

S − 5

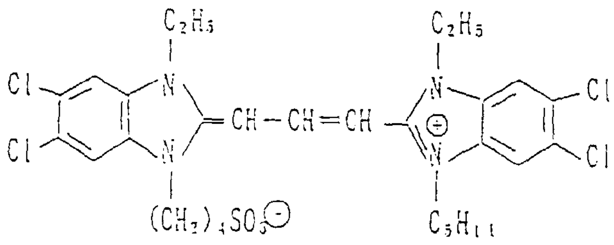

S − 6

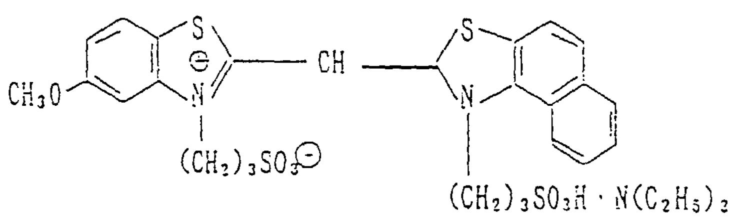

S－7

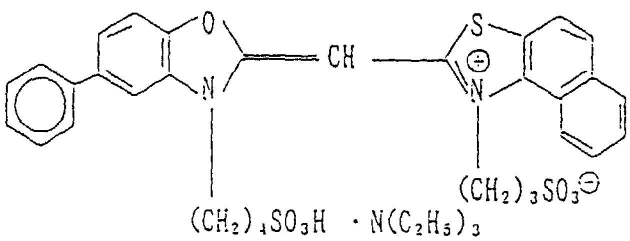

S－8

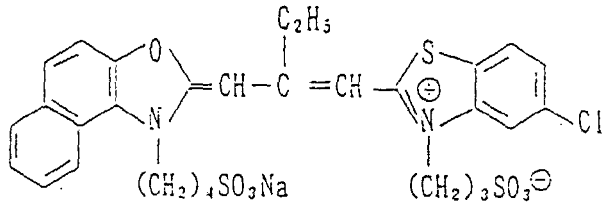

S－9

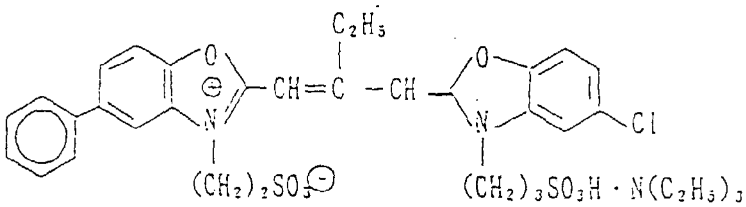

D－1

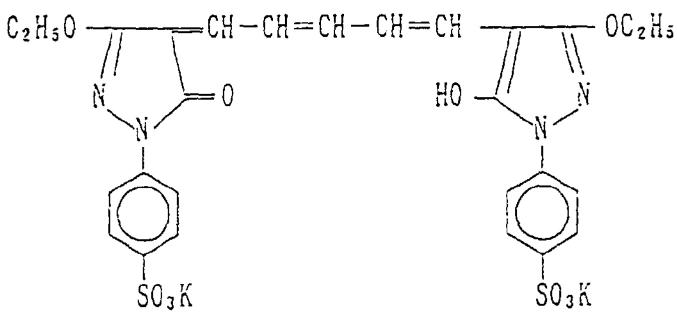

D – 2

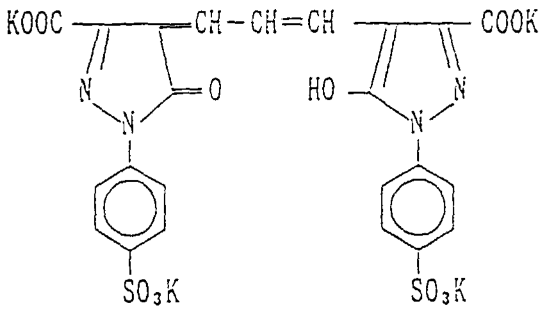

D – 3

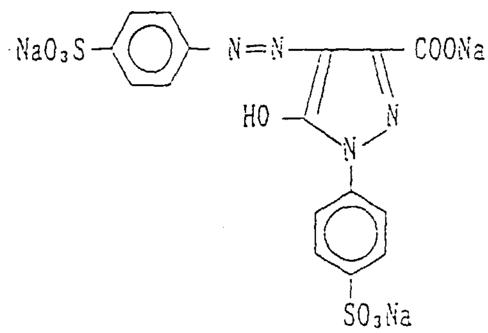

D – 4

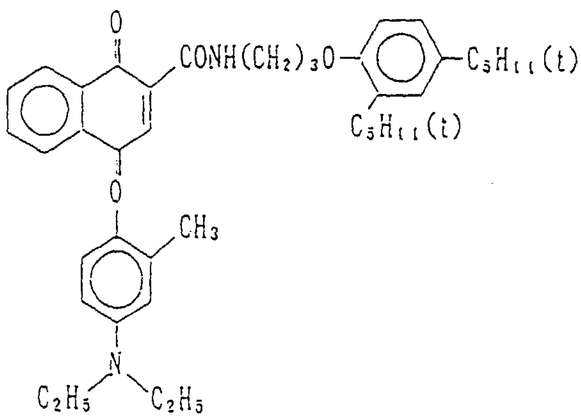

D – 5

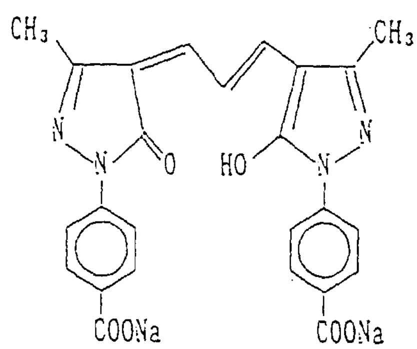

E − 1 (Dyestuff (IV) to be used in the present invention)

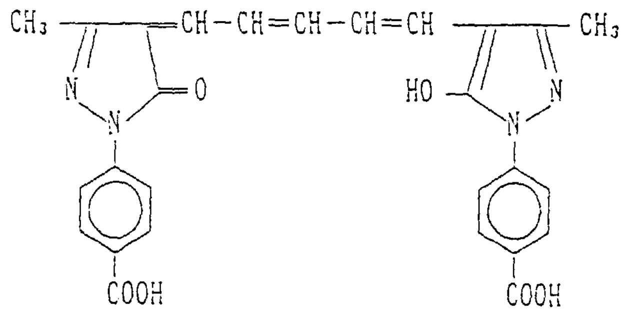

E − 2

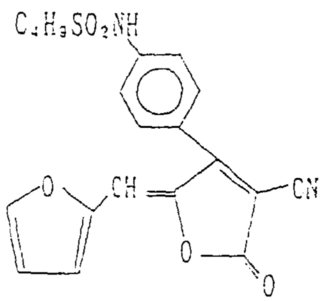

H − 1

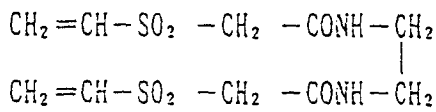

W − 1

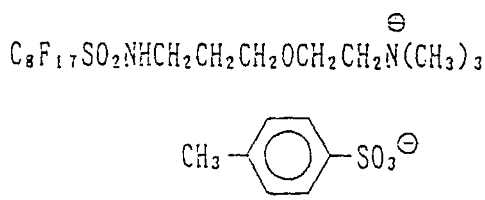

W − 2

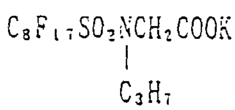

W − 3

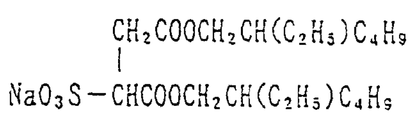

W − 4

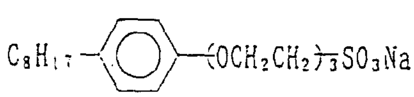

W-5

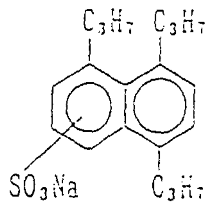

W-6

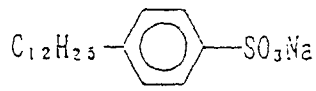

P-1

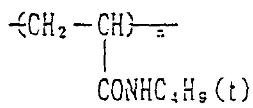

M-1

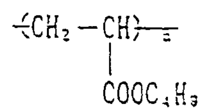

F-1

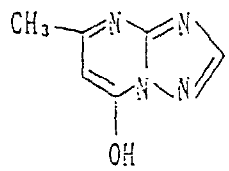

F-2

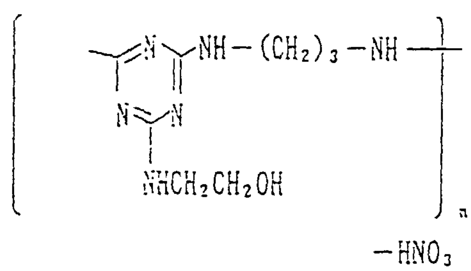

F-3

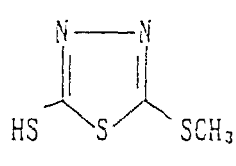

F-4

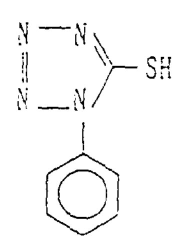

F − 5

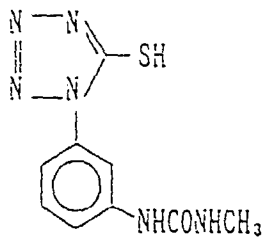

F − 6

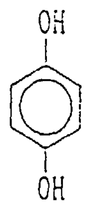

F − 7

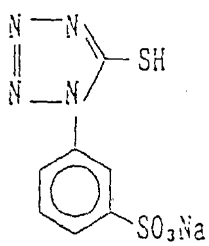

F − 8

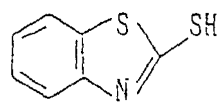

A multi-layer color light-sensitive material was prepared as Specimen 802 in the same manner as Specimen 801 except that Dyestuff E-1 to be incorporated in the 1st antihalation layer was replaced by Dispersion H of Dyestuff IV used in the present invention.

The silver halide color photographic material specimens thus prepared were exposed to light, and then processed in the following steps:

| Processing step | Time | Temperature |
|---|---|---|
| 1st Development | 6 min. | 38 °C |
| Washing | 2 min. | 38 °C |
| Reversal | 2 min. | 38 °C |
| Color development | 6 min. | 38 °C |
| Adjustment | 2 min. | 38 °C |
| Bleach | 6 min. | 38 °C |
| Fixing | 4 min. | 38 °C |
| Washing | 4 min. | 38 °C |
| Stabilization | 1 min. | 25 °C |

The various processing solutions had the following compositions:

| 1st Developer | |
|---|---|
| Pentasodium nitrilo-N,N,N-trimethylenephosphonic acid | 1.5 g |
| Pentasodium diethylenetriaminepentaacetate | 2.0 g |
| Sodium sulfite | 30 g |
| Hydroquinone potassium monosulfonate | 20 g |
| Potassium carbonate | 15 g |
| Sodium bicarbonate | 12 g |
| 1-Phenyl-4-methyl-4-hydroxymethyl-3-pyrazolidone | 1.5 g |

(continued)

| 1st Developer | |
|---|---|
| Potassium bromide | 2.5 g |
| Potassium thiocyanate | 1.2 g |
| Potassium iodide | 2.0 mg |
| Diethylene glycol | 13 g |
| Water to make | 1,000 mℓ |
| pH (adjusted with hydrochloric acid or potassium hydroxide) | 9.60 |

| Reversing solution | |
|---|---|
| Pentasodium nitrilo-N,N,N-trimethylenephosphonic acid | 3.0 g |
| Stannous chloride dihydrate | 1.0 g |
| p-Aminophenol | 0.1 g |
| Sodium hydroxide | 8 g |
| Glacial acetic acid | 15 mℓ |
| Water to make | 1,000 mℓ |
| pH (adjusted with hydrochloric acid or potassium hydroxide) | 6.00 |

| Color developer | |
|---|---|
| Pentasodium nitrilo-N,N,N-trimethylenephosphonic acid | 2.0 g |
| Sodium sulfite | 7.0 g |
| Trisodium phosphate dodecahydrate | 36 g |
| Potassium bromide | 1.0 g |
| Potassium iodide | 90 mg |
| Sodium hydroxide | 3.0 g |
| Citrazinic acid | 1.5 g |
| N-ethyl-N-(β-methanesulfonamideethyl)-3-methyl-4-aminoaniline 3/2 sulfate monohydrate | 11 g |
| 3,6-Dithiaoctane-1,8-diol | 1.0 g |
| Water to make | 1,000 mℓ |
| pH (adjusted with hydrochloric acid or potassium hydroxide) | 11.80 |

| Adjustor | |
|---|---|
| Disodium ethylenediaminetetraacetate dihydrate | 8.0 g |
| Sodium sulfite | 12 g |
| 1-Thioglycerol | 0.4 g |
| Formaldehyde-sodium bisulfite adduct | 30 g |
| Water to make | 1,000 mℓ |
| pH (adjusted with hydrochloric acid or sodium hydroxide) | 6.20 |

| Bleaching solution | |
|---|---|
| Disodium ethylenediaminetetraacetate dihydrate | 2.0 g |
| Ferric ammonium ethylenediaminetetraacetate dihydrate | 120 g |
| Potassium bromide | 100 g |
| Ammonium nitrate | 10 g |
| Water to make | 1,000 mℓ |
| pH (adjusted with hydrochloric acid or sodium hydroxide) | 5.70 |

| Fixing solution | |
|---|---|
| Ammonium thiosulfate | 80 g |
| Sodium sulfite | 5.0 g |
| Sodium bisulfite | 5.0 g |
| Water to make | 1,000 mℓ |
| pH (adjusted with hydrochloric acid or aqueous ammonia) | 6.60 |

| Stabilizer | |
|---|---|
| Benzoisothiazoline-3-one | 0.02 g |
| Polyoxyethylene-p-monononylphenylether (average polymerization degree: 10) | 0.3 g |
| Water to make | 1,000 mℓ |
| pH | 7.0 |

A fresh batch of Specimens 801 and 802 and another batch of these specimens which had been stored at a temperature of 50 °C and 80 % RH for 3 days were exposed to light, processed, and then measured for density to evaluate the change in red sensitivity.

Specimen 801 which had been stored under heat and moisture conditions exhibited a sensitivity drop of 0.20 with respect to the fresh batch while Specimen 802, which comprises the dispersion used in the present invention, exhibited a sensitivity drop of 0.05 with respect to the fresh batch. Thus, remarkable improvements were obtained.

**Claims**

1. A process for the dispersion of a dyestuff represented by the following formula (I), which comprises increasing regularity in orientation of dyestuff molecules wherein at least after the dispersion heating is effected at 50 to 95°C:

$$D - (X)_y \qquad (I)$$

wherein D represents a compound containing chromophores; X represents a dissociative proton or dissociative proton-containing group connected to D directly or via a divalent connecting group; and y represents an integer 1 to 7, characterized in that the heat treatment time is from 1 hour to 3 weeks.

2. A process for the dispersion of a dyestuff according to Claim 1, wherein dyestuff is an oxonol dyestuff and formula (I) is represented by the following formula (II)

$$A_1 =(L_1 - L_2)_m= L_3 -(L_4 = L_5)_n- A_2 \qquad (II)$$

wherein $A_1$ and $A_2$ each represents an acidic nucleus necessary for the formation of an oxonol dyestuff; $L_1$, $L_2$, $L_3$, $L_4$ and $L_5$ each represents a substituted or unsubstituted methine group; and m and n each represents an integer 0 or 1.

3. A dispersion process according to Claim 2, wherein said heating is effected in the presence of an organic compound containing carboxylic group.

4. A dispersion process according to Claim 2, wherein $A_1$ and $A_2$ in formula (II) each is a pyrazolone nucleus.

5. A silver halide photographic material, which comprises a dyestuff represented by formula (I') being dispersed therein by increasing regularity in orientation of dyestuff molecules wherein at least after the dispersion heating is effected at 50 to 95°C:

$$D' - (X')_{y'} \qquad (I')$$

wherein D' represents a compound containing chromophores; X' represents a dissociative proton or dissociative proton-containing group connected to D' directly or via a divalent connecting group; and y' represents an integer 1 to 7, characterized in that the heat treatment time is from 1 hour to 3 weeks.

**6.** A silver halide photographic material according to Claim 5 comprising on a support at least one light-sensitive silver halide emulsion layer and at least one hydrophilic colloidal layer containing a solid dispersion of dyestuff, said dyestuff is represented by formula (II') and the ratio of the absorbance at 680 nm to that at 530 nm in the absorption spectrum of said dyestuff is in the range of 0.50 or less:

$$A_1' = (L_1' - L_2')_{m'} = L_3' - (L_4' = L_5')_{n'} - A_2' \qquad (II')$$

wherein $A_1'$ and $A_2'$ each represents an acidic nucleus necessary for the formation of an oxonol dyestuff; $L_1'$, $L_2'$, $L_3'$, $L_4'$ and $L_5'$ each represents a substituted or unsubstituted methine group; and m' and n' each represents 0 or 1.

**7.** A silver halide photographic material according to Claim 6, wherein said dyestuff is represented by the following formula (III):

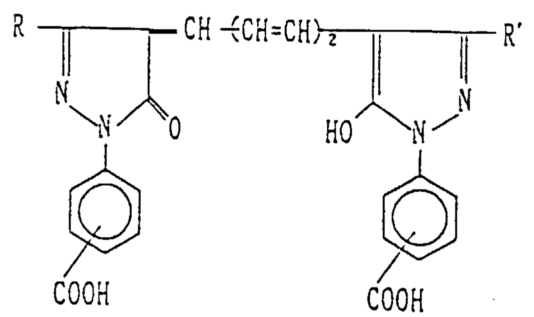

(III)

wherein R and R' each represents a substituted or unsubstituted alkyl group, a substituted or unsubstituted aryl group or an ester group.

**8.** A silver halide photographic material according to Claim 6 wherein the ratio of the primary diffraction intensity when the diffraction angle 2 θ of X-ray diffraction of said dyestuff is about 26 to 27 degrees to the secondary diffraction intensity when the diffraction angle 2 θ is about 14 degrees is 1.30 or less.

**9.** A silver halide photographic material according to Claim 7, wherein said dyestuff is represented by the following formula (IV):

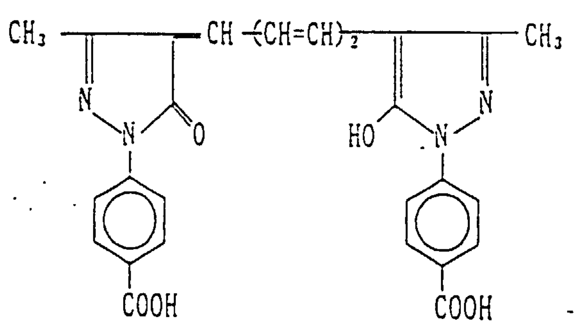

(IV)

**10.** A silver halide photographic material according to Claim 8, wherein said dyestuff is represented by the following formula (IV):

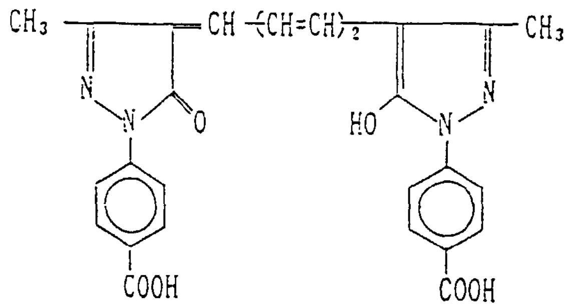

(IV)

**11.** A silver halide photographic material according to Claim 6, wherein said hydrophilic colloidal layer containing a solid dispersion of dyestuff is present between said support and said silver halide emulsion layer.

**12.** A silver halide photographic material according to Claim 11, wherein the coated amount of said hydrophilic colloid in the hydrophilic colloidal layer containing a solid dispersion of dyestuff is in the range of 0.5 $g/m^2$ or less per one side of the support.

**Patentansprüche**

**1.** Verfahren zum Dispergieren eines durch die folgende Formel (I) dargestellten Farbstoffs

$$D - (X)_y \qquad (I),$$

worin D eine Chromophore enthaltende Verbindung bedeutet, X ein dissoziationsfähiges Proton oder eine dissoziationsfähige Protonen enthaltende Gruppe bedeutet, die direkt oder über eine divalente verknüpfende Gruppe mit D verknüpft ist, und y eine ganze Zahl von 1 bis 7 bedeutet, umfassend das Erhöhen der Regelmäßigkeit der Orientierung von Farbstoff-Molekülen, wobei wenigstens nach dem Dispergieren auf 50 bis 95°C erwärmt wird, dadurch gekennzeichnet, daß die Dauer der Wärmebehandlung 1 Stunde bis 3 Wochen beträgt.

**2.** Verfahren zum Dispergieren eines Farbstoffs nach Anspruch 1, wobei der Farbstoff ein Oxonol-Farbstoff ist und die Formel (I) dargestellt wird durch die folgende Formel (II)

$$A_1 = (L_1 - L_2)_m = L_3 - (L_4 = L_5)_n - A_2 \qquad (II),$$

worin $A_1$ und $A_2$ jeweils einen sauren Kern bedeuten, der zur Bildung eines Oxonol-Farbstoffs erforderlich ist, $L_1$, $L_2$, $L_3$, $L_4$ und $L_5$ jeweils eine substituierte oder unsubstituierte Methin-Gruppe bedeuten, und m und n jeweils die ganze Zahl 0 oder 1 bedeuten.

**3.** Dispersionsverfahren nach Anspruch 2, wobei das Erwärmen in Gegenwart einer organischen Verbindung erfolgt, die eine Carboxyl-Gruppe enthält.

**4.** Dispersionsverfahren nach Anspruch 2, wobei $A_1$ und $A_2$ in Formel (II) jeweils ein Pyrazolon-Kern sind.

**5.** Photographisches Silberhalogenid-Material, umfassend einen durch Formel (I') dargestellten Farbstoff

$$D' - (X')_{y'} \qquad (I')$$

worin D' eine Chromophore enthaltende Verbindung bedeutet, X' ein dissoziationsfähiges Proton oder eine dissoziationsfähige Protonen enthaltende Gruppe bedeutet, die direkt oder über eine divalente verknüpfende Gruppe mit D' verknüpft ist, und y' eine ganze Zahl von 1 bis 7 bedeutet, der darin dispergiert wird durch Erhöhen der Regelmäßigkeit der Orientierung von Farbstoff-Molekülen, wobei wenigstens nach dem Dispergieren auf 50 bis

95°C erwärmt wird, dadurch gekennzeichnet, daß die Dauer der Wärmebehandlung 1 Stunde bis 3 Wochen beträgt.

**6.** Photographisches Silberhalogenid-Material nach Anspruch 5, umfassend auf einem Träger wenigstens eine lichtempfindliche Silberhalogenid-Emulsionsschicht und wenigstens eine hydrophile kolloidale Schicht, die eine feste Farbstoff-Dispersion enthält, wobei der Farbstoff dargestellt wird durch Formel (II')

$$A_1' = (L_1' - L_2')_{m'} = L_3' - (L_4' = L_5')_{n'} - A_2' \qquad (II')$$

worin $A_1'$ und $A_2'$ jeweils einen sauren Kern bedeuten, der zur Bildung eines Oxonol-Farbstoffs erforderlich ist, $L_1'$, $L_2'$, $L_3'$, $L_4'$ und $L_5'$ jeweils eine substituierte oder unsubstituierte Methin-Gruppe bedeuten, und m' und n' jeweils die ganze Zahl 0 oder 1 bedeuten, und das Verhältnis der Extinktion bei 680 nm zu der bei 530 nm im Absorptionsspektrum des Farbstoffs im Bereich von 0,50 oder darunter liegt.

**7.** Photographisches Silberhalogenid-Material nach Anspruch 6, wobei der Farbstoff dargestellt wird durch die folgende Formel (III):

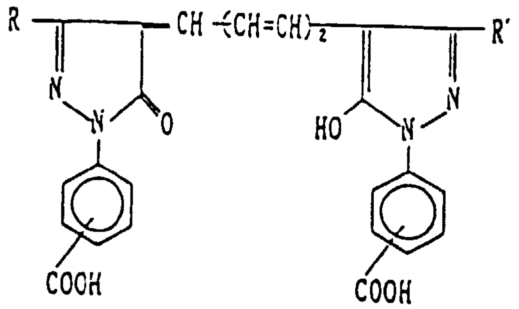

(III)

worin R und R' jeweils eine substituierte oder unsubstituierte Alkyl-Gruppe, eine substituierte oder unsubstituierte Aryl-Gruppe oder eine Ester-Gruppe bedeuten.

**8.** Photographisches Silberhalogenid-Material nach Anspruch 6, wobei das Verhältnis der primären Beugungsintensität, wenn der Beugungswinkel 2θ der Röntgenbeugung des Farbstoffs etwa 26 bis 27° beträgt, zur sekundären Beugungsintensität, wenn der Beugungswinkel 2θ etwa 14° beträgt, 1,30 oder kleiner ist.

**9.** Photographisches Silberhalogenid-Material nach Anspruch 7, wobei der Farbstoff dargestellt wird durch die folgende Formel (IV):

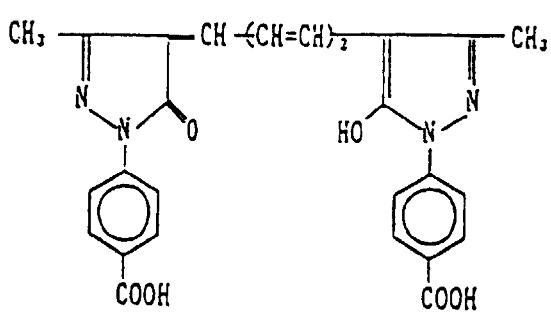

(IV)

**10.** Photographisches Silberhalogenid-Material nach Anspruch 8, wobei der Farbstoff dargestellt wird durch die folgende Formel (IV):

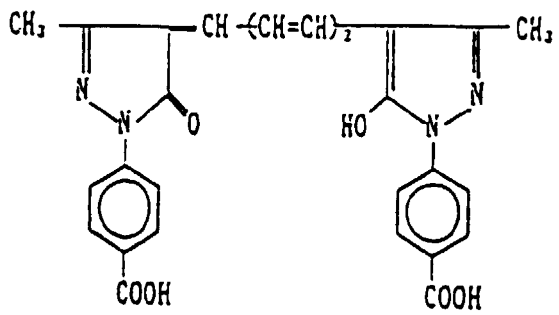

(IV)

**11.** Photographisches Silberhalogenid-Material nach Anspruch 6, wobei die hydrophile kolloidale Schicht, die eine feste Farbstoff-Dispersion enthält, zwischen dem Träger und der Silberhalogenid-Emulsionsschicht vorhanden ist.

**12.** Photographisches Silberhalogenid-Material nach Anspruch 11, wobei die aufgebrachte Menge an hydrophilem Kolloid in der eine feste Farbstoff-Dispersion enthaltenden hydrophilen kolloidalen Schicht im Bereich von 0,5 g/ $m^2$ pro Trägerseite oder darunter liegt.

**Revendications**

**1.** Procédé de dispersion d'un colorant représenté par la formule (I) suivante, comprenant l'augmentation de la régularité de l'orientation des molécules de colorant, selon lequel au moins après la dispersion, on effectue un chauffage de 50 à 95 °C:

$$D\text{-}(X)_y \qquad (I)$$

dans laquelle D représente un composé contenant des chromophores; X représente un proton dissociant ou un groupe contenant un proton dissociant relié directement à D ou par un groupe de liaison divalent; et y représente un entier de 1 à 7,
caractérisé en ce que le temps de traitement par la chaleur est de 1 heure à 3 semaines.

**2.** Procédé de dispersion d'un colorant selon la revendication 1, caractérisé en ce que le colorant est un colorant oxonol et que la formule (I) est représentée par la formule (II) suivante:

$$A_1 = (L_1 - L_2)_m = L_3 - (L_4 = L_5)_n - A_2 \qquad (II)$$

dans laquelle $A_1$ et $A_2$ représentent chacun un noyau acide nécessaire pour la formation d'un colorant oxonol; $L_1$, $L_2$, $L_3$, $L_4$ et $L_5$ représentent chacun un groupe méthine substitué ou non substitué; et m et n représentent chacun un entier égal à 0 ou 1.

**3.** Procédé de dispersion selon la revendication 2, caractérisé en ce que ledit chauffage est effectué en présence d'un composé organique contenant un groupe carboxylique.

**4.** Procédé de dispersion selon la revendication 2, caractérisé en ce que $A_1$ et $A_2$ dans la Formule (II) chacun est un noyau pyrazolone.

**5.** Matériau photographique à l'halogénure d'argent, qui comprend un colorant représenté par la formule (I') étant dispersé dans celui-ci par augmentation de la régularité de l'orientation des molécules de colorant, au moins après la dispersion, un chauffage étant effectué de 50 à 95 °C:

$$D'\text{-}(X')_{y'} \qquad (I')$$

dans laquelle D' représente un composé contenant des chromophores; X' représente un proton dissociant ou un groupe contenant un proton dissociant relié directement à D' ou par un groupe de liaison divalent; et y' représente un entier de 1 à 7,
caractérisé en ce que le temps de traitement par la chaleur est de 1 heure à 3 semaines.

**6.** Matériau photographique à l'halogénure d'argent selon la revendication 5, comprenant sur un support au moins une couche d'émulsion d'halogénure d'argent sensible à la lumière et au moins une couche colloïdale hydrophile contenant une dispersion solide de colorant, ledit colorant étant représenté par la formule (II') et le rapport de l'absorbance à 680 nm à celle à 530 nm dans le spectre d'absorption dudit colorant étant dans la zone de 0,50 ou moins:

$$A'_1 = (L'_1 - L'_2)_{m'} = L'_3 - (L'_4 = L'_5)_{n'} - A'_2 \qquad (II')$$

dans laquelle $A'_1$ et $A'_2$ représentent chacun un noyau acide nécessaire pour la formation d'un colorant oxonol; $L'_1$, $L'_2$, $L'_3$, $L'_4$ et $L'_5$ représentent chacun un groupe méthine substitué ou non substitué; et m' et n' représentent chacun un entier égal à 0 ou 1.

**7.** Matériau photographique à l'halogénure d'argent selon la revendication 6, caractérisé en ce que ledit colorant est représenté par la formule suivante (III):

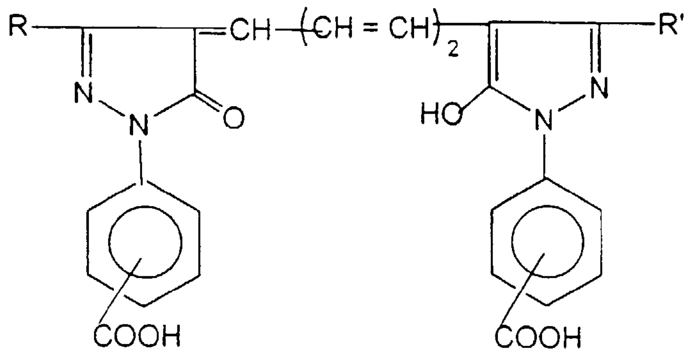

(III)

dans laquelle R et R' représentent chacun un groupe alkyle substitué ou non substitué, une groupe aryle substitué ou non substitué ou un groupe ester.

**8.** Matériau photographique à l'halogénure d'argent selon la revendication 6, caractérisé en ce que le rapport de l'intensité de diffraction primaire quand l'angle de diffraction 2 θ de diffraction de rayons X dudit colorant est d'environ 26 à 27 degrés à l'intensité de diffraction secondaire quand l'angle de diffraction 2 θ est d'environ 14 degrés est de 1,30 ou moins.

**9.** Matériau photographique à l'halogénure d'argent selon la revendication 7, caractérisé en ce que ledit colorant est représenté par la formule suivante (IV):

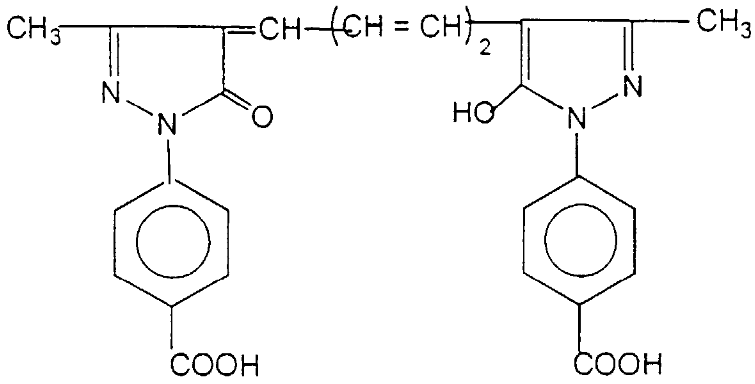

(IV)

10. Matériau photographique à l'halogénure d'argent selon la revendication 8, caractérisé en ce que ledit colorant est représenté par la formule suivante (IV):

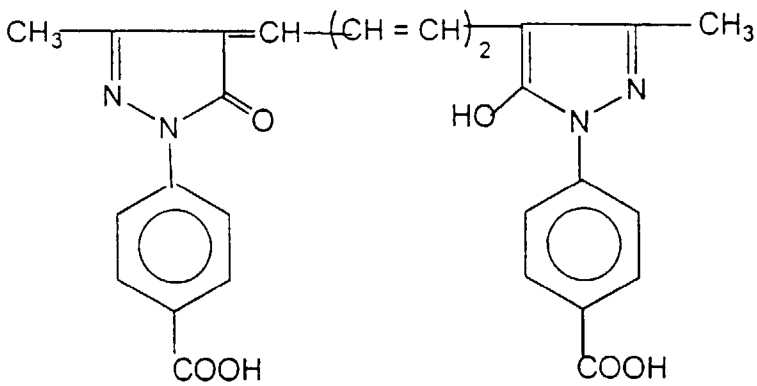

(IV)

11. Matériau photographique à l'halogénure d'argent selon la revendication 6, caractérisé en ce que ladite couche colloïdale hydrophile contenant une dispersion solide de colorant est présente entre ledit support et ladite couche d'émulsion d'halogénure d'argent.

12. Matériau photographique à l'halogénure d'argent selon la revendication 11, caractérisé en ce que la quantité revêtue dudit colloïde hydrophile dans la couche colloïdale hydrophile contenant une dispersion solide de colorant est dans la zone de 0,5 g/$m^2$ ou moins par un côté du support.

Fig. 1

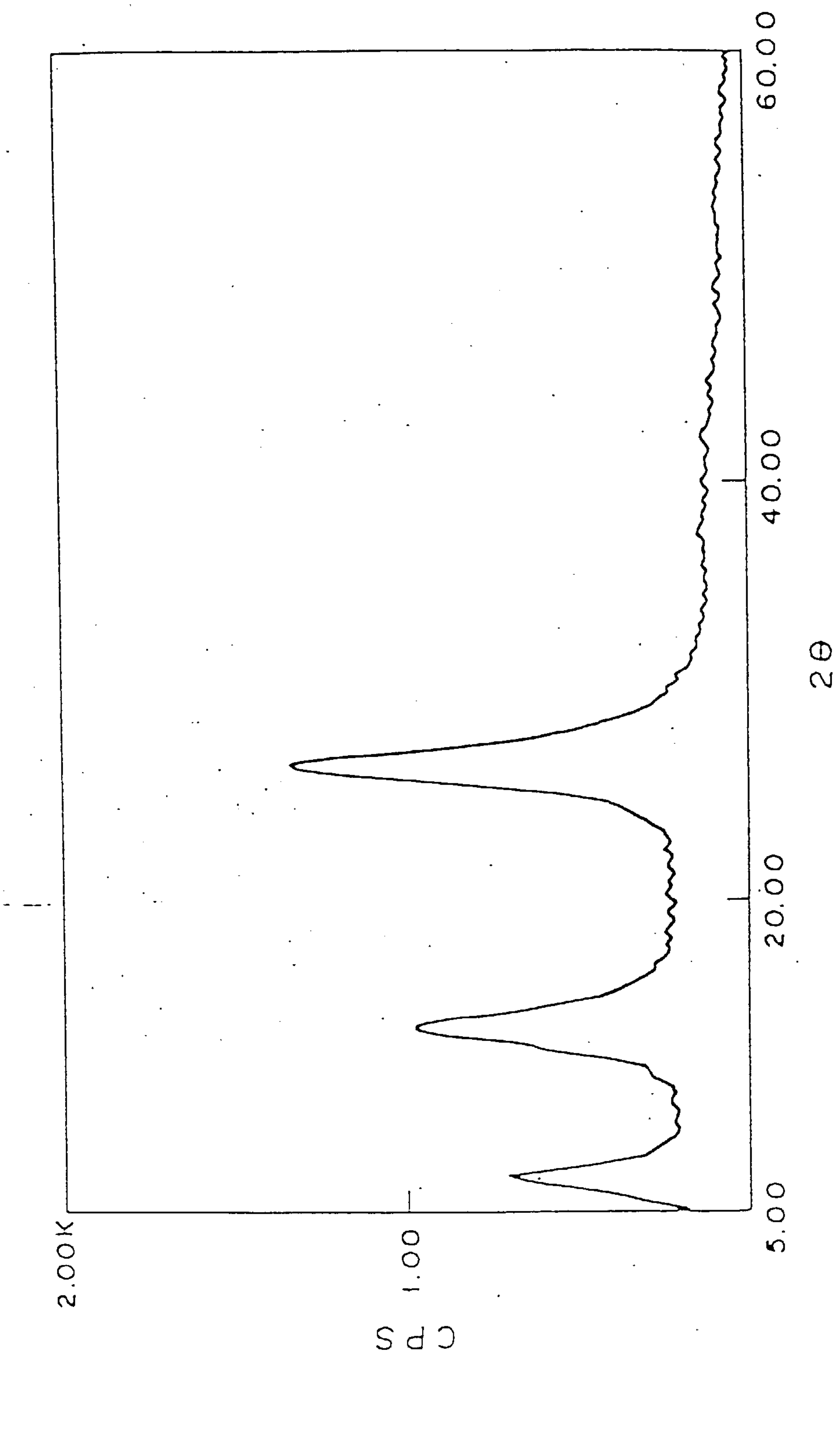

Fig. 2